# EUROPÄISCHE PATENTSCHRIFT

(11) **EP 3 590 814 B1**
(45) Veröffentlichungstag und Bekanntmachung des Hinweises auf die Patenterteilung: **27.04.2022**
(21) Anmeldenummer: 18182236.2
(22) Anmeldetag: 06.07.2018
(51) Int. Cl.: B62M 6/90, B62K 19/40, B62J 43/13, B62J 43/28, B62K 19/06, B62L 1/00, B62M 6/55, B62J 6/04, B62K 19/34, B62K 25/02, B62J 6/20, B62J 7/04, B62J 7/08, B62J 6/055, B62J 11/10, B62J 45/413, B62J 45/423, B62K 3/04

(54) **FAHRRAD MIT BATTERIEBETRIEBENEM HILFSANTRIEB UND FAHRRADRAHMEN HIERFÜR**
BICYCLE WITH BATTERY-ACTIVATED AUXILIARY DRIVE AND CORRESPONDING BICYCLE FRAME
BICYCLETTE POURVUE D'UN ENTRAÎNEMENT AUXILIAIRE FONCTIONNANT SUR BATTERIE ET CADRE DE BICYCLETTE CORRESPONDANT

(30) Priorität: 05.07.2018 EP 18181933
(43) Veröffentlichungstag der Anmeldung: 08.01.2020
(73) Patentinhaber: Winora-Staiger GmbH, 97526 Sennfeld (DE)
(72) Erfinder: Beutner, Ingo, 97737 Gemünden (DE)
(74) Vertreter: V.O.

(56) Entgegenhaltungen:
- DE-A1-102016 010 338
- DE-B3-102016 205 539
- JP-A- H1 159 532
- JP-A- 2000 272 567

## Beschreibung

Vorliegende Erfindung betrifft einen Fahrradrahmen für ein Fahrrad mit batteriebetriebenem Hilfsantrieb, umfassend wenigstens ein Rahmenrohr, das in seinem Innenraum einen axial verlaufenden Batterieaufnahmeabschnitt aufweist, zur Aufnahme einer Batterie, insbesondere für den Hilfsantrieb.

Darüber hinaus betrifft die Erfindung ein Fahrrad umfassend einen solchen Fahrradrahmen.

Derartige Fahrradrahmen sind aus dem Stand der Technik bekannt. Sie werden u.a. für Fahrräder mit Hilfsantrieb, sogenannte E-bikes, verwendet. Der Hilfsantrieb ist meist ein batteriebetriebener Hilfsantrieb und insbesondere ein Elektromotor. Sehr häufig werden diese Hilfsantriebe mit einem Kurbelantrieb kombiniert, sodass der Betrieb des Fahrrades sowohl per Motor als auch per Tretbetrieb möglich ist.

Zur Aufnahme der Batterien zum Speisen der Hilfsantriebe solcher Fahrräder sind unterschiedliche Ausgestaltungen bekannt. So ist es üblich, Batterien außenseitig am Unterrohr des Fahrradrahmens zu befestigen, es ist aber auch bekannt, Batterieaufnahmeabschnitte in den Rohren des Fahrradrahmens vorzusehen, in die die Batterien eingesetzt werden können. Dazu werden beispielsweise Einsetzöffnungen auf den Mantelflächen der Rohre vorgesehen, in die die Batterien dann meist orthogonal zur Haupterstreckungsachse der jeweiligen Rohre eingesetzt werden können.

Erfordern Lösungen, bei denen die Batterie außenseitig an den Rahmenrohren befestigt werden müssen, meist aufwendige Befestigungssysteme und beschädigungsanfällige Abdeckungen, weisen die bisher aus dem Stand der Technik bekannten Verfahren und Vorrichtungen zum Einführen von Batterien in Rohre des Fahrradrahmens insbesondere statische Nachteile auf. So erfordern die aus dem Stand der Technik bekannten Fahrradrahmen mit im Innenraum eingesetzten Batterien, sogenannte Intube-Batterien, meist eine sehr dicke Wandkonstruktion der Rohre und aufwändige statische Aussteifungen, um die nötige Stabilität des Fahrradrahmens zu gewährleisten. Dies führt zu sehr teuren und darüber hinaus sehr schweren Fahrradrahmen. Dies ist nicht gewünscht.

Die DE 10 2016 205539 B3 beschreibt einen Fahrzeugrahmen mit einem Unterrohrabschnitt, einem Steuerrohrabschnitt und einem Tretlagerabschnitt, wobei sich der Unterrohrabschnitt zwischen dem Steuerrohrabschnitt und dem Tretlagerabschnitt erstreckt. Der Unterrohrabschnitt ist als ein Hohlprofil ausgebildet, in das ein Energiespeicher einsetzbar ist. Ferner weist der Unterrohrabschnitt an zumindest einem axialen Ende eine Öffnung auf, die eine Öffnung in dem Fahrzeugrahmen definiert, durch die ein Energiespeicher hindurch in den Unterrohrabschnitt einsetzbar und/oder aus dem Unterrohrabschnitt herausnehmbar ist.

Die JP 2000 272567 A offenbart eine Batteriemontage- und -demontagevorrich-tung, für ein E-bike. Die JP 2000 272567 A offenbart einen Fahrradrahmen gemäß dem Oberbegriff des unabhängigen Anspruches 1. Die Batterie wird in einem hohlen Oberrohr von einem hinteren Öffnungsteil des Oberrohrs aus herausnehmbar gelagert, wobei der hintere Öffnungsteil durch ein drehbares Deckelteil geöffnet und geschlossen werden kann. Ein Sattel wird in einer vom hinteren Öffnungsteil des Oberrohrs versetzten Position im Deckelteil höhenverstellbar angebracht.

Die DE 10 2016 010338 A1 beschreibt eine Energiespeichervorrichtung für ein E-bike. Die Vorrichtung umfasst eine Batterie und ein Mittel zum elektrischen Koppeln der Batterie mit dem E-bike. Die Batterie ist in ein Unterrohr des E-bikes integrierbar und durch ein Befestigungsmittel verriegelbar.

Die JP H11 59532 A beschreibt einen in einem Oberrohr eines E-bikes angeordneten Batteriespeicherplatz. Am hinteren Ende des Oberrohrs ist ein Deckelement zum Öffnen und Schließen des Batteriespeicherplatzes vorgesehen. Das Deckelement kann mittels eines aus einem Sattelrohr entfernbaren Sitzrohr geöffnet und geschlossen werden.

All diese Lösungen weisen jedoch Mängel auf.

Aufgabe der vorliegenden Erfindung ist es, ein Fahrrad anzubieten, das bei leichter Bauweise eine sichere Befestigung einer Batterie für einen Hilfsantrieb und einen schnelleren Zusammenbau erlaubt.

Diese Aufgabe wird durch einen Fahrradrahmen gemäß dem unabhängigen Anspruch 1, und ein Fahrrad gemäß dem Anspruch 14 gelöst.

Nach Anspruch 1 wird diese Aufgabe gelöst durch einen Fahrradrahmen für ein Fahrrad mit batteriebetriebenem Hilfsantrieb, umfassend wenigstens ein Rahmenrohr, das in seinem Innenraum einen axial verlaufenden Batterieaufnahmeabschnitt aufweist, zur Aufnahme einer Batterie für den Hilfsantrieb, wobei der Batterieaufnahmeabschnitt eine stirnseitig verlaufende Einschuböffnung aufweist, über die die Batterie mit ihrer Stirnseite voraus in den Batterieaufnahmeabschnitt einschiebbar ist, wobei ein Schienensystem vorgesehen ist, das wenigstens eine axial verlaufende Schiene aufweist, die axial in eine, wahlweise integral am Rahmenrohr ausgebildete komplementäre Schienenaufnahme einschiebbar ist, und das axial in den Innenraum des Rahmenrohres einführbar und am Rahmenrohr mittels eines Festlegemittels gegen eine Axial-Bewegung festlegbar ist, und das ein Batterieführungsmittel aufweist, welches eine Schiebeführung zum axialen Einschieben der Batterie in den Batterieaufnahmeabschnitt bildet, wobei das Rahmenrohr ein Unterrohr ist, das zwischen einem Lenkkopfbereich und einem Antriebslagerbereich verläuft, und wobei das Schienensystem ein Batteriearretierungsmittel aufweist, ausgebildet, um die Batterie im Batterieaufnahmeabschnitt und gegen axiales Herausschieben zu verriegeln, und/oder ein Batterieanschlussmittel aufweist, zum Anschluss der in den Batterieaufnahmeabschnitt eingeschobenen Batterie, wobei das Batterieanschlussmittel einen Batteriehub aufweist, der am Schienensystem befestigt ist, wobei das Schienensystem derart ausgebildet ist, dass es zusammen mit dem Batteriearretierungsmittel und/oder dem Batteriehub in den Innenraum des Rahmenrohres einschiebbar ist.

Darüber hinaus wird diese Aufgabe gelöst durch ein Fahrrad nach Anspruch 14 mit einem Hilfsantrieb und einem Fahrradrahmen, wie er hierin beschrieben ist.

Die Erfindung ist anwendbar bei einer Batterie für einen Fahrradrahmen, wie er hier beschrieben ist, wobei der Fahrradrahmen ein Rahmenrohr, nämlich ein Unterrohr, aufweist, das zwischen einem Lenkkopfbereich und einem Antriebslagerbereich verläuft, und das in seinem Innenraum einen axial verlaufenden Batterieaufnahmeabschnitt aufweist, wobei der Fahrradrahmen eine axial zu einer Haupterstreckungsachse des Batterieaufnahmeabschnitts im Innenraum verlaufende Führungsfeder und/oder eine Führungsnut aufweist, und wobei, wenn der Fahrradrahmen eine Führungsfeder aufweist, die Batterie wenigstens eine zu dieser Führungsfeder wenigstens abschnittsweise komplementäre insbesondere axial verlaufende Führungsnut aufweist, und, wenn der Fahrradrahmen eine Führungsnut aufweist, die Batterie wenigstens eine zu dieser Führungsnut wenigstens abschnittsweise komplementäre insbesondere axial verlaufende Führungsfeder aufweist.

Wesentlich ist, dass das Rahmenrohr derart ausgebildet ist, dass die in den Batterieaufnahmeabschnitt im Rahmenrohr einzuschiebende Batterie axial in das Rahmenrohr bzw. den Batterieaufnahmeabschnitt eingeführt werden kann und nicht, wie dieser aus dem Stand der Technik bekannt ist, über Einsetzöffnungen, insbesondere in der Mantelfläche des Rahmenrohres, die ein orthogonales Einsetzen der Batterie zur Haupterstreckungsachse erfordert. Aus statischer Sicht ergibt sich somit eine Rahmenkonstruktion, die bei wenigstens gleicher Stabilität eine sehr viel geringere Wandstärke und sehr viel geringere statische Aussteifungen erfordert. Die Erfindung betrifft optional die Ausbildung des Unterrohres des Fahrradrahmens als insbesondere im Bereich der Mantelfläche im Wesentlichen geschlossenes Profil.

Diese Erfindung betrifft sämtliche Arten von Unterrohren, die zwischen einem Lenkkopfbereich und einen Antriebslagerbereich verlaufen. Unter Lenkkopfbereich wird der Bereich eines Fahrradrahmens verstanden, in dem üblicherweise eine Vorderradgabel, ein Lenker, ein Vorbau etc. montiert wird. Er befindet sich üblicherweise im vorderen oberen Bereich eines Fahrrades. Unter Antriebslagerbereich wird der Bereich verstanden, in dem ein Antrieb gelagert wird, hier kann es sich um einen Tretantrieb, einen Hilfsantrieb oder eine Kombination aus beiden handeln. Bei einem herkömmlichen Fahrrad bzw. Fahrradrahmen ist ein solcher Antriebslagerbereich üblicherweise in der Mitte des Fahrrades unten zu finden. Der Antriebslagerbereich dient optional der Aufnahme eines Tretlagers bzw. einer Kurbel zum Kurbelantrieb des Fahrrades. Auch dient er bei einer besonderen Ausführungsform der Aufnahme eines Hilfsmotors und insbesondere einer Aufnahme eines Hilfsmotors kombiniert mit einem Tretantrieb. Das Rahmenrohr des erfindungsgemäßen Fahrradrahmens ist vorzugsweise direkt zwischen Lenkkopfbereich und Antriebslagerbereich angeordnet, verbindet diese Bereiche also ohne Zwischenrohre. Es ist aber auch denkbar, ein Unterrohr auszubilden, das über Zwischenrohre zwischen dem Lenkkopfbereich und dem Antriebslagerbereich verläuft.

Unter einem Hilfsmotor wird üblicherweise ein elektrischer Motor verstanden.

Optional ist es denkbar, dass die Einschuböffnung antriebslagerseitig angeordnet ist, sodass die Batterie vonseiten des Antriebslagers in den Batterieaufnahmeabschnitt des Rahmenrohres eingeschoben werden kann. Bei einem Fahrrad, bei dem der Antriebslagebereich mittig unten und der Lenkkopfbereich vorne oben ausgebildet ist, wird insofern also die Batterie von unten nach schräg oben eingeschoben. Optional ist der Fahrradrahmen derart ausgebildet, dass die Batterie entlang einer Einschubrichtung Rx axial zur Haupterstreckungsachse Ax des Batterieaufnahmeabschnitts in den Batterieaufnahmeabschnitt einschiebbar ist. Wird im Umfang der Erfindung von axial gesprochen, ist optional, außer es ist anderweitig erwähnt, immer die Haupterstreckungsachse des Batterieaufnahmeabschnitts oder eine dazu koaxiale Achse gemeint.

Optional ist das Rahmenrohr entlang der Haupterstreckungsebene des Fahrradrahmens (verlaufend von hinten nach vorne und in Radebene) und von vorne nach hinten betrachtet schräg nach unten geneigt ausgebildet. Der Batterieaufnahmeabschnitt ist optional gerade ausgebildet, d. h., er weist eine gerade Haupterstreckungsachse Ax auf. Diese Haupterstreckungsachse Ax ist vorzugsweise koaxial zur Haupterstreckungsachse des Rohres ausbildet, in dem der Batterieaufnahmeabschnitt ausgebildet ist. Es ist auch möglich, das Rahmenrohr gebogen auszuführen und darin entlang der Haupterstreckungsachse Ax des Batterieaufnahmeabschnitts einen wenigstens abschnittsweise geraden Batterieaufnahmeabschnitt vorzusehen. Auch ist es denkbar, den Batterieaufnahmeabschnitt und/oder die insbesondere dazu komplementär ausgebildete Batterie als nicht geraden Körper auszubilden, beispielsweise als gebogenen Körper, wobei die Haupterstreckungsachse beispielsweise dann die Form eines Kreis-, elliptischen oder dergleichen Bogens aufweist. Optional entspricht die Geometrie des Batterieaufnahmeabschnitts der Geometrie der Batterie. Dies betrifft insbesondere den Volumenkörper der Batterie, der dem Volumenkörper des Batterieaufnahmeabschnitts entspricht. Auch entspricht vorzugsweise der größte Querschnitt der Batterie, betrachtet entlang seiner Haupterstreckungsachse, dem größten Lichtraumprofil des Batterieaufnahmeabschnitts, betrachtet entlang dessen Haupterstreckungsachse, so dass die Batterie in den Batterieaufnahmeabschnitt eingeschoben werden kann.

Die Batterie ist vorzugsweise als lang gestreckter, zylindrischer oder dergleichen volumiger Körper ausgebildet. Die Batterie ist optional als allgemeiner Zylinder ausgebildet, mit einer Stirnseitenfläche, die entlang der Haupterstreckungsachse der Batterie verschoben den Volumenkörper der Batterie bildet. Optional ist das Rahmenrohr im Bereich des Batterieaufnahmeabschnitts gerade und die in den Batterieaufnahmeabschnitt einzuschiebende Batterie korrespondierend gerade ausgebildet, und zwar derart, dass sie in den Batterieaufnahmeabschnitt eingeschoben werden kann. An den Enden des Batterieaufnahmeabschnitts kann das Rahmenrohr entsprechende Anschlussrohre bzw. Anschlussbereich zum Anschluss an den Lenkkopfbereich und/oder den Antriebslagerbereich aufweisen.

Die Einschuböffnung ist wenigstens teilweise, optional antriebslagerseitig, stirnseitig am Rahmenrohr angeordnet. Die Verallgemeinerung "wenigstens teilweise" bedeutet hier optional, dass die Einschuböffnung sich auch abschnittsweise in die Mantelfläche erstrecken kann, wobei optional diese Erstreckung maximal 30 %, optional maximal 20 % und weiter optional maximal 10 % der Gesamtgröße der Einschuböffnung umfasst. Optional ist ein Großteil der Einschuböffnung stirnseitig und nur ein geringerer Teil, insbesondere im Umfang der zuvor genannten Bereichsangaben mantelseitig am Rahmenrohr ausgebildet. Insbesondere die mantelseitige Ausführung der Einschuböffnung kann ein schwenkverschiebbares Einsetzen der Batterie in den Batterieaufnahmeabschnitt ermöglichen. So ist es denkbar, die Batterie unter einem geringen Schwenkwinkel α in die Einschuböffnung einzuführen und dann während des axialen Verschiebens um diesen Schwenkwinkel α verschwenkend achsenparallel auszurichten. Optional beträgt dieser Schwenkwinkel α weniger 25°, weiter optional weniger 15° und weiter optional weniger 5°.

Optional ist die Mantelfläche des Rahmenrohres im Bereich des Batterieaufnahmeabschnitts zu wenigstens 90 %, insbesondere wenigstens 95 %, geschlossen. Dies bedeutet insbesondere, dass optional keine Öffnungen vorgesehen sind, die von der Mantelfläche aus im Bereich des Batterieaufnahmeabschnitts das Einsetzen und insbesondere Einschwenken der Batterie erlauben.

Optional bedeutet die stirnseitige Ausbildung der Einschuböffnung, dass die Einschuböffnung in einem Bereich des Rahmenrohres vorgesehen ist, der nicht oder nur geringfügig in der Mantelfläche im Bereich des Batterieaufnahmeabschnitts liegt. Wahlweise erstreckt sich die Einschuböffnung in einer Ebene, die orthogonal zur Hauterstreckungsachse des Batterieaufnahmeabschnitts liegt und wahlweise in einer Ebene, die um maximal ± 25°, weiter optional um maximal ± 15° und weiter optional um maximal ± 5° von dieser Ebene um eine Achse orthogonal zur Haupterstreckungsachse abweicht. Bzw. geneigt ist.

Optional ist seitlich am Rahmenrohr und im Speziellen außerhalb einer axialen Verlängerung des Lichtraumprofils des Batterieaufnahmeabschnitts am Rahmenrohr der Antriebslagerbereich ausgebildet, insbesondere umfassend ein Antriebslagergehäuse, zur Aufnahme des Hilfsantriebs, und zwar derart, dass die Batterie seitlich an einem im Antriebslagergehäuse gelagerten Hilfsantrieb vorbei in den Batterieaufnahmeabschnitt einschiebbar ist.

Hier sei erwähnt, dass der Hilfsantrieb auch als eine Kombination aus Motorantrieb und Tretantrieb ausgebildet sein kann. Die Ausgestaltung des derart angeordneten Antriebslagerbereichs erlaubt das Einführen der Batterie ohne oder mit nur geringem Schwenkwinkel α in den Batterieaufnahmeabschnitt im Rahmenrohr. Optional ist insbesondere antriebslagerseitig umfangseitig ein Antriebslagergehäuse für den Hilfsmotor derart am Rahmenrohr angeschlossen, dass die Batterie seitlich an einem dem Antriebslagergehäuse gelagerten Hilfsantrieb vorbei in den Innenraum einschiebbar ist. Das Antriebslagergehäuse ist wahlweise zur Aufnahme eines Hilfsantriebs mit Tretkurbelantrieb ausgebildet.

Der erfindungsgemäße Fahrradrahmen und insbesondere das Rahmenrohr können wenigstens abschnittsweise aus einem Extrusionsprofil oder dergleichen insbesondere Strangpressprofil hergestellt sein. Es ist möglich, den Fahrradrahmen aus einem Metallwerkstoff, und insbesondere Aluminium, herzustellen. Darüber hinaus ist es denkbar, den Fahrradrahmen aus einem Kunststoffmaterial, und insbesondere aus einem Carbonmaterial oder dergleichen Faserwerkstoff, herzustellen. Hybridformen sind ebenfalls denkbar.

Wahlweise ist ein Abdeckelement vorgesehen, das, die Einschuböffnung überdeckend, lösbar am Rahmenrohr angeordnet ist. Auch ist es denkbar, ein Abdeckelement vorzusehen, das, die Einschuböffnung überdeckend, lösbar am Rahmenrohr und am Antriebslagergehäuse anordbar ist. Es ist denkbar, dass das Abdeckelement als Rammschutzelement fungiert. Auch ist es denkbar, dass das Abdeckelement als Aufnahmeelement für Werkzeug oder dergleichen Zubehör für das Fahrrad bzw. den Fahrradrahmen ausgebildet ist. Zudem ist es denkbar, in einem Raum im Bereich der Einschuböffnung und/oder an dem Abdeckelement entsprechende Halterungen und/oder Aufnahmeräume für solches Werkzeug und Zubehör zur Verfügung zu stellen.

Wahlweise ist insbesondere im Innenraum des Rahmenrohres und insbesondere in das Lichtraumprofil des Batterieaufnahmeabschnitts einragend wenigstens ein Teil eines Batterieführungsmittels angeordnet, das eine Schiebeführung zum axialen Einschieben der Batterie in den Batterieaufnahmeabschnitt bildet. Bei einer besonderen Ausführungsform weist das Batterieführungsmittel wenigstens eine optional integral am Rahmenrohr ausgebildete Führungsfeder und die Batterie wenigstens eine dazu wenigstens abschnittsweise komplementäre Führungsnut auf, und/oder umgekehrt. Es ist denkbar, dass die Führungsfeder bzw. die Führungsnut, wenn sie am Rahmenrohr ausgebildet sind bzw. angeordnet sind, über die Einschuböffnung aus dem Batterieaufnahmeabschnitt und insbesondere dem Innenraum axial nach außen ragen. Insbesondere ragen sie so axial nach außen, dass ein Koppeln der Batterie mit dem Batterieführungsmittel am Rahmenrohr möglich ist und so ein geführtes Einschieben in den Batterieaufnahmeabschnitt schon vor Erreichen des Batterieaufnahmeabschnitts möglich ist. Es ist denkbar, eine oder mehrere Führungsfedern bzw. Führungsnuten oder dergleichen Führungselement am Rahmenrohr und/oder der Batterie vorzusehen. Darüber hinaus ist es denkbar, insbesondere im Innenraum des Rahmenrohres weitere Führungselemente, beispielsweise Führungsschienen, hervorstehende Führungsanschläge, Führungsvorsprünge, komplementäre Führungsnuten, Führungsvertiefungen etc. auszubilden.

Es ist denkbar, am Batterieführungsmittel entsprechende Schleifmittel und/oder Klemmmittel vorzusehen, um einen Klemmsitz zwischen Batterie und Rahmenrohr insbesondere im eingeschobenen Zustand zu gewährleisten. Auf diese Weise kann die Batterie wenigstens temporär im Rahmenrohr gelagert und ein Herausrutschen der Batterie verhindert werden, bis eine endgültige Verriegelung, wie sie insbesondere im Folgenden noch im Detail beschrieben ist, erfolgt ist.

Wahlweise sind die Führungsnut und/oder Führungsfeder koaxial zur Einschubrichtung verlaufend ausgebildet. Die Einschubrichtung ist optional co-axial zur Haupterstreckungsachse des Batterieaufnahmeabschnittes ausgerichtet.

Es ist denkbar, das Batterieführungsmittel mit einem Leitelement auszubilden, das optional vom Antriebslagerbereich zum Innenraum des Rahmenrohres und dort optional zum Batterieaufnahmeabschnitt verläuft und eine Einleitführung für die Batterie und insbesondere ein Einleitführung zum Koppel der Batterie mit einem Batterieführungsmittel bildet. Die Einleitführung kann so ausgebildet sein, dass sie eine Führung für die Batterie zum Koppeln mit dem Batterieführungsmittel bildet. So kann das Leitelement eine Führung bilden, um eine Führungsnut an der Batterie mit einer Führungsfeder am Rahmen, und/oder umgekehrt einfach in Kopplung zu bringen. Hier sind sämtliche Führungselemente anwendbar. Das Leitelement ist optional zur Haupterstreckungsachse des Batterieaufnahmeabschnitts so geneigt, dass eine darin angesetzte Batterie einen Schwenkwinkel von maximal 25°, optional von maximal 15°, weiter optional von maximal 5° zur Haupterstreckungsachse aufweist. Sobald die Batterie über das Leitelement in das Batterieführungsmittel und mittels diesem in den Batterieaufnahmeabschnitt im Innenraum des Rahmenrohres geschoben wird, verändert sich sukzessive dieser Schwenkwinkel, sodass sich die Batteriehaupterstreckungsachse im Laufe des Einschiebens in den Batterieaufnahmeabschnitt sukzessive der Haupterstreckungsachse des Batterieaufnahmeabschnitts annähert und bei vollständigem eingeschobenen Zustand koaxial dazu ausgerichtet ist.

Optional gilt im Umfang der Erfindung, dass unter axialem Einschieben auch ein Einschieben mit einer Winkelabweichung der Batteriehaupterstreckungsachse relativ zur Batterieaufnahmeabschnitthaupterstreckungsachse um maximal 25°, optional von maximal 15°, optional um maximal 5° mit umfasst ist.

Es ist denkbar, im Innenraum des Rahmenrohres Kabelführungsmittel zur Führung von Kabelzügen anzuordnen. Kabelzüge können sein: Schaltzüge, Seilzüge, Bremszüge, Kabel und Leitungen und dergleichen Züge und Kabel, insbesondere zur Ansteuerung, Kontrolle und Überwachung des Fahrrades bzw. Fahrradrahmens. Solche Kabelführungsmittel können insbesondere integral mit dem Rahmenrohr ausgebildet sein. Hier sind beispielsweise jegliche Arten von Klemmen, Kanälen und Rohren denkbar. Auch ist es denkbar, die Kabelführungsmittel integral mit dem Batterieführungsmittel und insbesondere wenigstens einer Führungsfeder und/oder Führungsnut auszubilden. Es ist denkbar, die Kabelführungsmittel so auszubilden, dass sie ein Einsetzen von Kabelzügen in nur axialer Richtung, also insbesondere entlang der Haupterstreckungsachse der Kabelführung erlauben, es ist aber auch denkbar, die Kabelführungsmittel als insbesondere orthogonal zur Haupterstreckungsachse offene Aufnahmemittel auszuführen, sodass Kabelzüge orthogonal zur Haupterstreckungsachse in die Kabelführungsmittel eingeführt werden können. Insbesondere sind die Kabelführungsmittel optional ausgebildet zum Festklemmen oder dergleichen Festlegen der Kabelzüge im Innenraum, insbesondere um ein Klappern der Kabel bei der Benutzung des Fahrrades zu verhindern..

Im Innenraum des Rahmenrohres ist wenigstens ein Batteriearretierungsmittel vorgesehen, zum Arretieren der Batterie und optional unterschiedlicher Batterien im Batterieaufnahmeabschnitt, insbesondere umfassend eine Stirnseitenkappe, die über die Einschuböffnung in den Innenraum des Rahmenrohres einsetzbar und dort lösbar verriegelbar ist und so eine in den Batterieaufnahmeabschnitt eingeschobene Batterie insbesondere gegen ein axiales Herausschieben verriegelt.

Insbesondere zum Verriegeln unterschiedlicher Batterien, ist die Stirnseitenkappe derart ausgebildet, dass sie an unterschiedlichen Positionen im Rahmenrohr verriegelbar ist. Optional ist der Fahrradrahmen, optional das Batterieverriegelungsmittel, und weiter optional die Stirnseitenkappe derart ausgebildet, dass unterschiedliche Batterien und insbesondere unterschiedlich lange Batterien vollständig in den Batterieaufnahmeabschnitt, optional bis an ein lenkkopfbereichsseitiges Ende schiebbar sind, um dann antriebslagerbereichsseitig verriegelt zu werden. Optional kann die Batterie bis zu einem Batterieanschlussmittel und insbesondere einem Batteriehub eingeschoben werden, welche im Folgenden noch im Detail beschrieben sind.

Die Stirnseitenkappe kann optional stirnseitig insbesondere lösbar an der Batterie befestigbar ausgebildet sein. Hier sind beispielsweise Schiebefixierungen, Rastfixierungen, Schnappfixierungen etc. anwendbar. Vorzugsweise ist die Stirnseitenkappe derart ausgebildet, dass sie zusammen mit der Batterie in den Innenraum des Rahmenrohres einschiebbar ist. Auch ist es denkbar, entsprechende Adaptermittel vorzusehen, um die Stirnseitenkappe mit unterschiedlichen Batterien in Verbindung zu bringen bzw. eine sichere Fixierung der Batterie im Batterieaufnahmeabschnitt zu gewährleisten. Optional weist die Stirnseitenkappe wenigstens einen Teil des Batterieführungsmittels und insbesondere eine Führungsnut und/oder eine Führungsfeder auf. Die Verriegelung und/oder Entriegelung kann durch Vorspannung, und insbesondere Federvorspannung, durch manuelle und/oder mechanische und/oder elektrische Betätigung erreicht werden.

Optional weist die Stirnseitenkappe wenigstens ein Verriegelungsmittel und das Rahmenrohr wenigstens ein Verriegelungsgegenmittel auf, oder umgekehrt, die mittels eines Betätigungsmittels miteinander unter Verriegelung der Batterie im Batterieaufnahmeabschnitt miteinander in Verriegelungsstellung und unter Freigabe der Batterie im Batterieaufnahmeabschnitt in eine Entriegelungsstellung bringbar sind. Insbesondere zur Verriegelung unterschiedlicher und insbesondere unterschiedlich langer Batterien, sind optional eine Mehrzahl an Verriegelungsgegenmitteln und/oder Verriegelungsmitteln, insbesondere axial hintereinander insbesondere im Innenraum des Rahmenrohres vorgesehen. Das Betätigungsmittel kann beispielsweise ein Schlossmittel, ein Hebel, ein Elektromotor, ein Vorspannmittel, wie ein Feder, oder jede andere Art von Mittel sein, um das Verriegelungsmittel in die Verriegelungsstellung zu drängen oder aus dieser zu entfernen bzw. das Verriegelungsgegenmittel in die Verriegelungsstellung zu bringen oder aus dieser zu entfernen.

Wahlweise weist beispielsweise das Verriegelungsmittel wenigstens einen Sperrbolzen auf, und das Verriegelungsgegenmittel wenigstens eine komplementäre Sperrbolzenaufnahme, oder umgekehrt, wobei der Sperrbolzen in Verriegelungsstellung die Stirnseitenkappe verriegelnd in die Sperrbolzenaufnahme eingreift und in Entriegelungsstellung die Stirnseitenkappe entriegelnd außer Eingriff mit der Sperrbolzenaufnahme steht. In Verriegelungsstellung ist die Stirnseitenkappe so fest am Rahmenrohr fixiert und die im Batterieaufnahmeabschnitt gehaltene Batterie arretiert. In der Entriegelungsstellung kann die Stirnseitenkappe aus dem Innenraum entnommen und die Batterie aus dem Batterieaufnahmeabschnitt herausgeschoben werden. Ist die Stirnseitenkappe mit der Batterie verbunden, ist es denkbar, die Verbindung so auszugestalten, dass ein Entnehmen der Stirnseitenkappe gleichzeitig ein Herausziehen der Batterie erlaubt. Hier können entsprechende Entnahmehilfsmittel zum Herausziehen der Batterie aus dem Batterieaufnahmeabschnitt zur Verfügung gestellt werden. Hier sind beispielsweise Griffe, Hakenelemente, Bügel oder dergleichen Zugelemente anwendbar, die beispielsweise an der Stirnseitenkappe und/oder der Batterie ausgebildet sein können. Solche Entnahmehilfsmittel können auch oder alternativ an der Batterie vorgesehen sein.

Optional sind eine Mehrzahl an Sperrbolzenaufnahmen bzw. Sperrbolzen am Rahmenrohr vorgesehen, insbesondere um unterschiedliche Batterien und im Besonderen unterschiedlich lange Batterien zu verriegeln.

Optional ist der wenigstens eine Sperrbolzen orthogonal zur Haupterstreckungsachse der Batterie angeordnet, wenn die Stirnseitenkappe an der Batterie angeordnet und/oder die Stirnseitenkappe im Innenraum des Rahmenrohres verriegelt eingesetzt ist. Der Sperrbolzen kann beispielsweise federvorgespannt ausgebildet sein, sodass er in die Verriegelungsstellung drängt. Der Sperrbolzen kann beispielsweise Einsatzschrägen aufweisen, sodass er die Federvorspannung überwindend in die Sperrbolzenaufnahmen eingeschoben werden kann, wobei beim Einsetzen die Sperrbolzen kurzzeitig zurückgedrängt werden, um dann anschließend wieder in die Sperrbolzenaufnahmen einzugreifen. Die Sperrbolzen können optional mittel des Betätigungsmittels aus der Verriegelungsstellung in die Entriegelungsstellung zurückgezogen werden und zwar optional gegen eine Federvorspannung.

Das Betätigungsmittel kann optional als Schlossmittel vorgesehen sein, um nur einer berechtigen Person, beispielsweise mittels eines passenden Schlüssel, das Entriegeln und/oder Verriegeln der Stirnseitenkappe und insofern das Entnehmen der Batterie zu erlauben. Hier sind sämtliche Arten von Schlössern, insbesondere mechanische, elektronische, magnetische als auch elektromechanische Schlösser verwendbar. Vorzugsweise sind zwei diametral zueinander ausgebildete Sperrbolzen an der Stirnseitenkappe ausgebildet, die in Verriegelungsstellung in korrespondierend ausgebildete Sperrbolzenaufnahmen am Rahmenrohr eingreifen.

Wahlweise ist insbesondere im Innenraum des Rahmenrohres wenigstens ein Batterie-Temporärhaltemittel und insbesondere ein Batterieklemmmittel derart vorgesehen, dass die Batterie im Batterieaufnahmeabschnitt gegen Einwirken der Schwerkraft in der Entriegelungsstellung klemmfixiert gelagert, aber manuell durch einen Benutzer über eine Zugkraft entgegengesetzt zur Einschubrichtung Rx herausziehbar ist. Auf diese Weise kann eine Batterie in den Batterieaufnahmeabschnitt eingeführt werden, wobei sie dort verbleibt und der Nutzer so auf sehr einfache Weise eine Verriegelung durchführen kann, ohne dass er sich darum kümmern muss, die Batterie im Batterieaufnahmeabschnitt zu halten. Ein solches Batterie-Temporärhaltemittel kann beispielsweise die zuvor beschriebene Ausführung der Führungsfeder mit entsprechenden vorgesehenen Klemmmittel sein. Ein Klemmmittel kann u.a. ein Federvorspannmittel, ein Reibmittel oder ein Haftmittel sein.

Es ist denkbar, entsprechende Klemmmittel am Rahmenrohr oder entsprechenden anderen Mitteln, wie dem Batterieführungsmittel und solchen Mitteln, wie sie im Folgenden auch noch im Detail beschrieben werden, vorzusehen, um insbesondere einen Klemm- oder Reibungssitz der Batterie im Batterieaufnahmeabschnitt zu erzielen.

Im Innenraum des Rahmenrohres ist wenigstens ein Batterieanschlussmittel vorgesehen, das insbesondere im Bereich des zum Lenkkopfbereich weisenden Endes des Rahmenrohres, und insbesondere angrenzend an den Batterieaufnahmeabschnitt, einen Batteriehub aufweist, zum Anschluss der in den Batterieaufnahmeabschnitt eingeschobenen Batterie. Dieser Batteriehub weist vorzugsweise einen Stecker bzw. eine Steckeraufnahme auf, die komplementär zu einer Steckeraufnahme bzw. einem Stecker an der Batterie ausgebildet ist. Weiter ist vorzugsweise eine magnetische Hafteinrichtung derart vorgesehen, dass Batteriehub und Batterie im eingeschobenen Zustand eine Haftkraft zueinander aufweisen, sodass die Batterie im Batterieaufnahmeabschnitt gegen Einwirken der Schwerkraft in der Entriegelungsstellung fixiert gelagert, aber manuell durch einen Benutzer über eine Zugkraft entgegengesetzt zur Einschubrichtung Rx herausziehbar ist. Hier gelten die zuvor in Bezug auf die Batterie-Temporärhaltemittel genannten Möglichkeiten identisch.

Wie eingangs beschrieben, ist in den Innenraum des Rahmenrohres ein Schienensystem einführbar, das wenigstens eine Schiene aufweist, die axial in eine wahlweise integral am Rahmenrohr ausgebildete komplementäre Schienenaufnahme einschiebbar ist, wobei das Schienensystem am Rahmenrohr mittels eines Festlegemittels gegen eine Axialbewegung festlegbar ist, und wobei das Schienensystem ein Batteriearretierungsmittel und/oder ein Batterieanschlussmittel aufweist. Diese zuvor beschriebenen Mittel sind mit einem Schienensystem kombinierbar und zusammen mit diesem in den Innenraum des Rahmenrohres einschiebbar. Wahlweise kann das Schienensystem vorkomplettiert mit wenigstens einem der zuvor genannten Mittel oder Teilen davon ausgestattet sein und so als Einheit in den Innenraum des Rahmenrohres eingeschoben werden. Im Detail ist also das Schienensystem derart ausgebildet, dass es zusammen mit wenigstens einem der zuvor beschriebenen Mittel, nämlich dem Batteriearretierungsmittel und/oder dem Batterieanschlussmittel, sowie optional mit dem Batterieführungsmittel, und Batterie-Temporärhaltemittel, oder wenigstens Teilen davon in den Innenraum des Rahmenrohres einschiebbar ist. Auf diese Weise können vorkomplettierte Schienensystemversorgungssysteme zur Verfügung gestellt werden, die je nach Fahrradrahmen mit unterschiedlichen Mitteln bestückt eingeschoben werden können und so einen schnellen Aufbau eines Fahrrades erlauben.

So kann insbesondere in diesem Zusammenhang das Verriegelungsgegenmittel bzw. Verriegelungsmittel des Batteriearretierungsmittels an wenigstens einer Schiene des Schienensystems ausgebildet sein. So können beispielsweise an der wenigstens einen Schiene wenigstens ein Verriegelungsgegenmittel und/oder wenigstens ein Verriegelungsmittel vorgesehen sein. Optional ist es denkbar an der Schiene wenigstens einen Sperrbolzen und/oder wenigstens eine Sperrbolzenaufnahme vorzusehen. Insbesondere zur Verriegelung unterschiedlicher und insbesondere unterschiedlich langer Batterien, sind optional eine Mehrzahl an Sperrbolzen und/oder Sperrbolzenaufnahmen, insbesondere axial hintereinander insbesondere im Innenraum des Rahmenrohres vorgesehen. Auch ist es denkbar, dass ein Teil des Batterieanschlussmittels und insbesondere der Batteriehub am Schiebensystem ausgebildet ist und so einfach in das Rahmenrohr eingeschoben werden kann. Es sind optional auch Kabelführungen am Schienensystem vorsehbar, die optional zur Zuführung bzw. Ableitung von Kabeln an das Batterieanschlussmittel dienen, und wahlweise am Schienensystem befestigt sein können. Auch ist es denkbar, die Batterie-Temporärhaltemittel wenigstens teilweise am Schienensystem auszuführen und insbesondere wenigstens eine Schiene mit einem Klemmmittel auszurüsten bzw. diese als ein solches Klemmmittel auszubilden, insbesondere derart, dass sie die im Batterieaufnahmeabschnitt eingeschobene Batterie gegen ein Arretierungselement vorspannt und so wenigstens temporär, wie hier bereits beschrieben, gegen ein Herausfallen festlegt.

Zudem kann optional wenigstens eines der beschriebenen Mittel derart ausgebildet sein, dass es der Festlegung der Batterie im Aufnahmeabschnitt dient, insbesondere um einen festen, spielfreien Sitz der Batterie zu gewährleisten.

Grundsätzlich ist es möglich, optional alternativ oder in Ergänzung zum beschriebenen Schienensystem, das Rahmenrohr mit Lager- und/oder Führungselementen zum Lagern bzw. Führen der Batterie auszubilden. Diese Lager- und/oder Führungselemente sind optional integral am Rahmenrohr ausgebildet.

Wie erwähnt ist ein Festlegemittel vorgesehen, über das das Schienensystem am Rahmenrohr gegen eine Axial-Bewegung festlegbar ist. Wahlweise ist eine Verriegelung des Schienensystems im Rahmenrohr gegen axiales Herausgleiten des Schienensystems vorgesehen. So können beispielsweise Schienenaufnahmen vorgesehen sein, die ein axiales Einführen des Schienensystems bzw. wenigstens einer Schiene in das Rahmenrohr erlauben und eine Arretierung in wenigstens eine orthogonale Richtung zur Haupterstreckungsachse erlauben. Eine axiale Fixierung erfolgt dann beispielsweise über ein zusätzliches Fixiermittel, beispielsweise einen Schnappriegel, einen Schraubbolzen oder jede andere Art von Verriegelung, die beispielsweise ein Festlegen des Schienensystems und insbesondere der einen Schiene am Rahmenrohr oder eines vergleichbaren dazu geeigneten Bauteils erlauben. Eine solche Schienenaufnahme kann eine Einschiebenut sein, die komplementär zur Schiene ausgebildet ist.

Wie zuvor erwähnt betrifft die Erfindung auch ein Fahrrad mit einem batteriebetriebenen Hilfsantrieb und einem Fahrradrahmen, wie er hier beschrieben ist. Aus Redundanzgründen wird jedoch lediglich auf das hierin in Bezug auf den Fahrradrahmen Gesagte verwiesen. Für das Fahrrad gilt Identisches. Selbiges gilt für die erfindungsgemäße Batterie.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1: eine isometrische Ansicht einer Ausführungsform des erfindungsgemäßen Fahrrades;
- Fig. 2: eine isometrische Darstellung einer Ausführungsform des erfindungsgemäßen Fahrradrahmens;
- Fig. 3 und 4: Ausführungsformen des erfindungsgemäßen Fahrradrahmens im Längsschnitt;
- Fig. 5: eine isometrische Darstellung einer Ausführungsform des Fahrradrahmens gemäß Fig. 3 mit geöffneter Einführöffnung;
- Fig. 6: eine isometrische Detail-Darstellung der Ausführungsform gemäß Fig. 3 mit teilgeschnittener Mantelfläche des Rahmenrohres;
- Fig. 7: eine isometrische Detail-Darstellung der Ausführungsform gemäß Fig. 3 mit entfernter Mantelfläche des Rahmenrohres und entfernter Batterie;
- Fig. 8: eine isometrische Darstellung der Ausführungsform gemäß Fig. 3 mit entfernter Batterie;
- Fig. 9: eine isometrische Darstellung in Querschnittsrichtung gemäß der Sichtrichtung aus Fig. 5 durch die Ausführungsform gemäß Fig.3;
- Fig. 10: isometrische Darstellungen einer Ausführungsform der Batterie
- Fig. 11 - 13: isometrische Darstellungen von Lichtelementen integriert in Ausfallenden des Fahrrades gemäß Fig. 1;
- Fig. 14: isometrische Detaildarstellungen der Lichtelemente gemäß Fig. 11;
- Fig. 15: eine isometrische Darstellung einer Ausführungsform eines Messrings gemäß Fig. 1;
- Fig. 16: ein Ansicht des Messrings gemäß Fig. 15;
- Fig. 17: eine Seitenansicht des Messrings gemäß Fig. 15;
- Fig. 18: eine isometrische Darstellung einer weiteren Ausführungsform eines Fahrradrahmens mit einem Gepäckträger;
- Fig. 19 - 21: isometrische Detaildarstellungen der Ausführungsform bzw. des Gepäckträgers aus Fig. 18;
- Fig. 22 und 23: isometrische Detaildarstellungen einer weiteren Ausführungsform des Gepäckträgers und eines Befestigungsmittels für Anbauteile; und
- Fig. 24 und 25: isometrische Detaildarstellungen der Ausführungsform bzw. des Befestigungsmittels aus Fig. 21.

Im Folgenden werden für gleiche und gleich wirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier besprochene technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angibt, jedoch das Vorhandensein oder das Hinzufügen eines oder mehrerer anderer Merkmale nicht ausschließt. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert.

Die Erfindung wird hier anhand der beiliegenden Zeichnungen beschrieben, in denen Ausführungsformen der Erfindung gezeigt sind. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben.

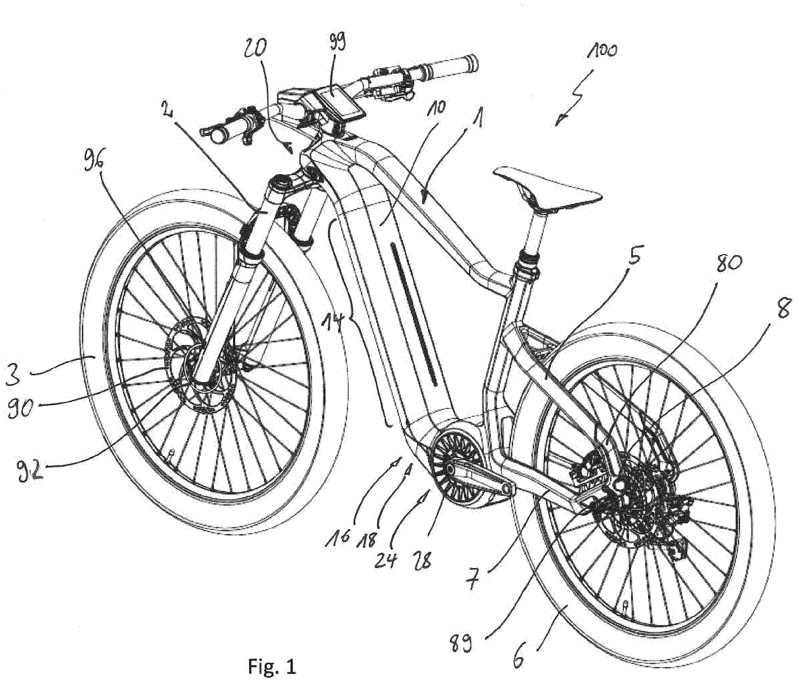

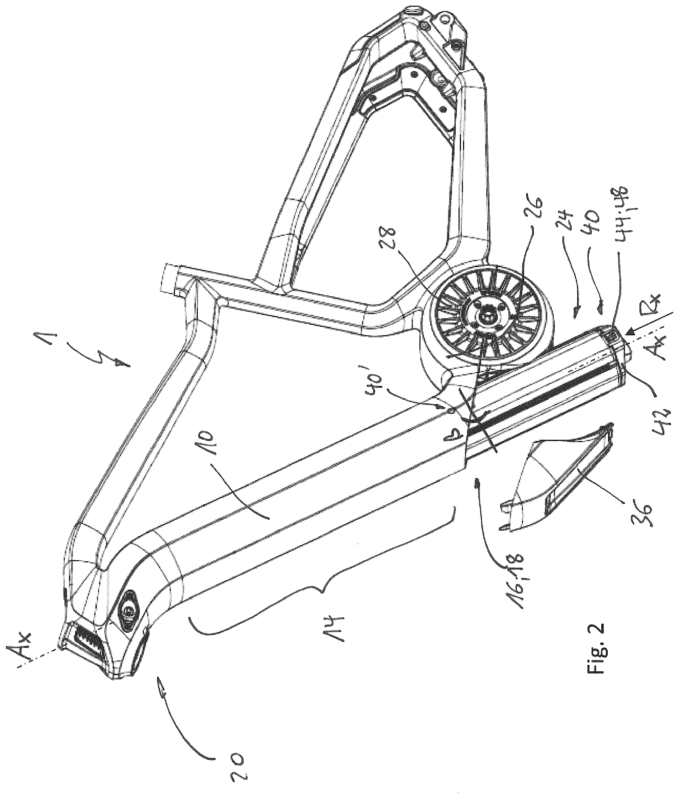

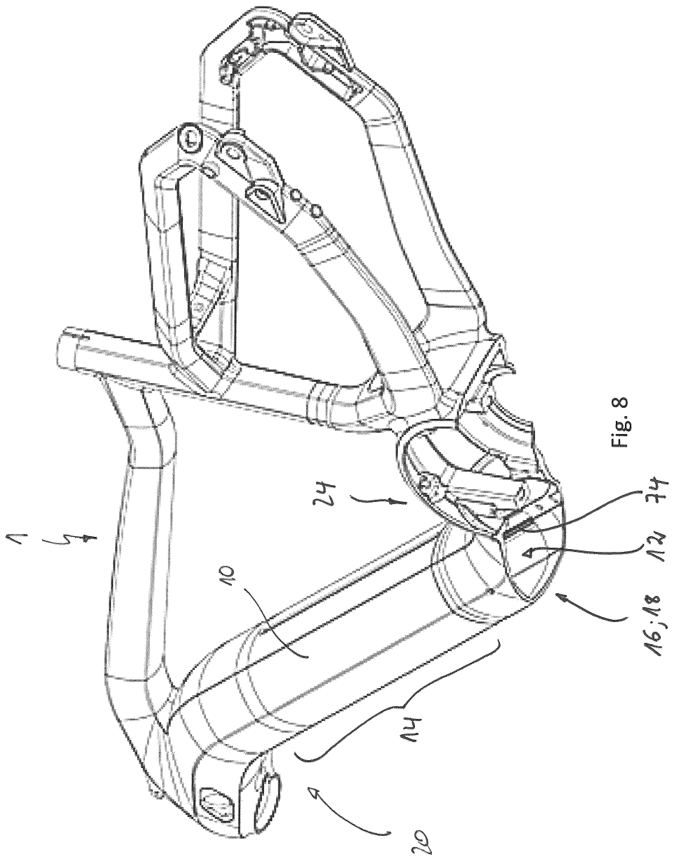

Fig. 1 zeigt eine isometrische Darstellung einer Ausführungsform des erfindungsgemäßen Fahrrades 100, umfassend eine Ausführungsform des erfindungsgemäßen Fahrradrahmens 1. Dieser Fahrradrahmen 1 ist in den weiteren Figuren dargestellte Fig. 2 - 9 und im Detail erläutert. Am Fahrradrahmen 1 ist in einem Lenkkopfbereich 20 eine Vordergabel 2 angeordnet, die ein Vorderrad 3 trägt. An diesem Vorderrad 3 ist eine Bremsscheibe 90 umfassend einen Messring 92 angeordnet, die im weiteren Verlauf noch im Detail beschrieben wird, und Teil eines inkrementellen Messwegesystems ist. Weiter ist am Fahrradrahmen 1 ein Hinterrad 6 angeordnet, das an einem Ausfallende 8 positioniert ist. Das Ausfallende 8 ist Teil des Fahrradrahmens 1, wobei es in bekannter Art und Weise an Sitzstreben 5 und Kettenstreben 7 angeschlossen ist. Optional ist es möglich, obigen Messring 92 bzw. das inkrementelle Messwegesystem auch oder alternativ am Hinterrad bzw. Rahmenkomponenten in diesem Bereich zu positionieren. An den Ausfallenden 8 und insbesondere im Bereich angrenzend an die Sitzstreben 5 sind Lichtelemente 80 integriert, die im Detail im Folgenden noch weiter erläutert werden.

Der Fahrradrahmen 1 umfasst einen Antriebslagerbereich 24, an dem ein Antriebslagergehäuse 26 zur Aufnahme eines insbesondere batteriebetriebenen Hilfsmotors 28 ausgebildet ist. Der Hilfsmotor 28 kann beispielsweise ein Elektromotor und insbesondere ein Elektromotor mit Kurbelantrieb sein. Die entsprechende Kurbel ist hier nicht dargestellt.

Hinsichtlich der hier dargestellten Ausführungsformen gilt das im vorhergehenden allgemeinen Teil beschriebene identisch; es ist in Gänze auf die dargestellten Ausführungsformen anwendbar.

Der Fahrradrahmen 1 umfasst darüber hinaus ein Rahmenrohr 10, in Form eines Unterrohres, das zwischen dem Lenkkopfbereich 20 und dem Antriebslagerbereich 24 verläuft. Es verläuft optional in geneigter Ausführung von einem in Bezug auf die Fahrradlängsebene vorne oben angeordnetem Lenkkopfbereich 20 und einem im Wesentlichen mittig unten angeordneten Motorlagerbereich.

Erfindungsgemäß ist das Rahmenrohr 10 derart ausgebildet, dass in seinem Innenraum 12 und einem dort axial verlaufenden Batterieaufnahmeabschnitt 14 eine Batterie 104, insbesondere für den Hilfsantrieb 28, eingeschoben werden kann.

Dabei ist erfindungsgemäß der Batterieaufnahmeabschnitt 14 mit einer stirnseitig 16 verlaufenden Einschuböffnung 18 ausgestattet, über die die Batterie 104 mit ihrer Stirnseite 102 voraus in den Batterieaufnahmeabschnitt 14 einschiebbar ist.

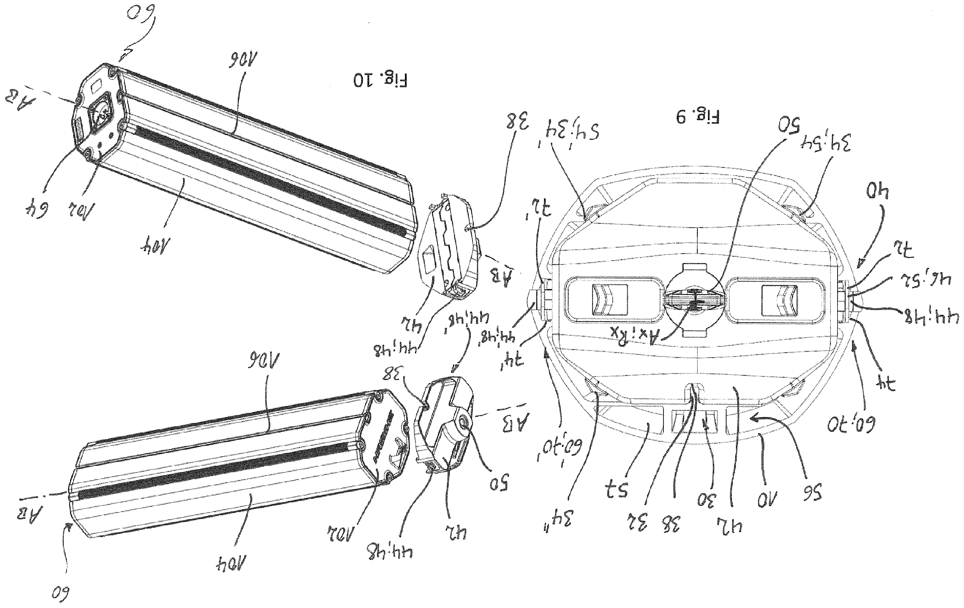

Die erfindungsgemäße Anordnung bzw. Einschubmöglichkeit der Batterie 104 in den Fahrradrahmen 1, und insbesondere den Batterieaufnahmeabschnitt 14, ist in den Figuren 1 bis 9 im Detail dargestellt. Fig. 10 widmet sich der Detaildarstellung der Batterie 104.

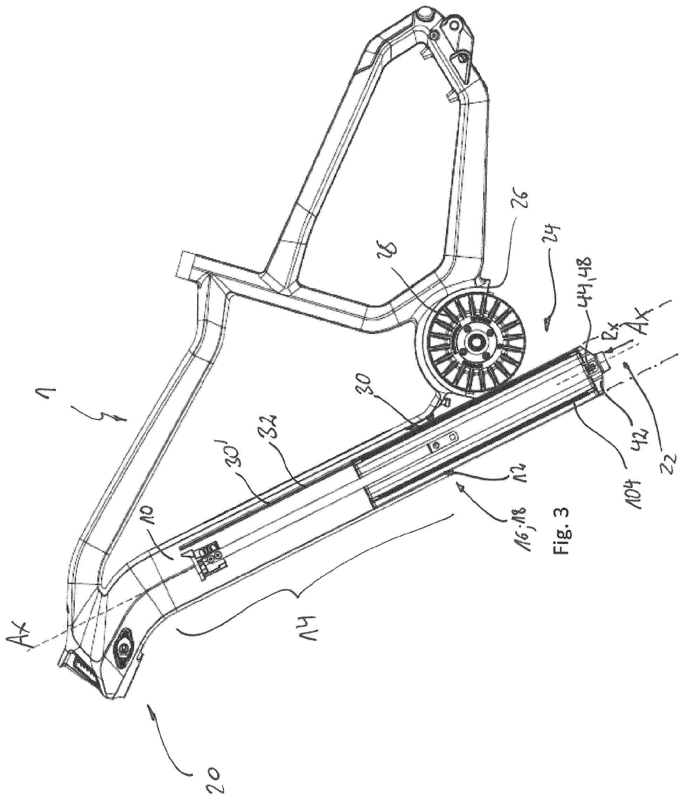

Wie insbesondere in Fig. 3 dargestellt, ist wahlweise der Fahrradrahmen derart ausgebildet, dass die Batterie 104 entlang einer Einschubrichtung Rx axial zur Haupterstreckungsachse Ax des Batterieaufnahmeabschnitts 14 in den Batterieaufnahmeabschnitt einschiebbar ist. Wenn, wie dies optional möglich ist, die Einschuböffnung 18 antriebslagerseitig 24 angeordnet ist, erfolgt das Einschieben der Batterie 104 von der Unterseite des Fahrrades her.

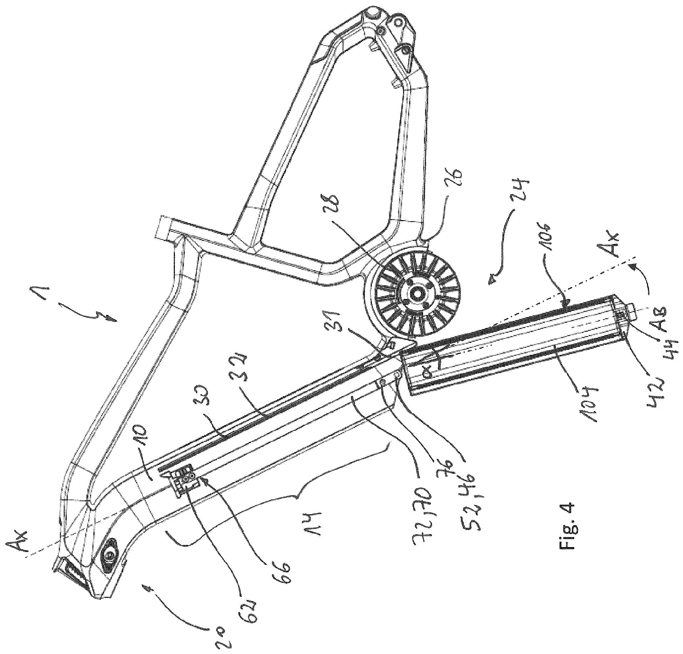

Es ist denkbar, die Batterie und den Batterieaufnahmeabschnitt 14 bzw. die Einschuböffnung 18 derart auszubilden, dass die Batterie vollständig axial, also entlang der Achse Ax in den Batterieaufnahmeabschnitt 14 eingeschoben werden kann. Es ist aber auch denkbar, dass die Batterie einen geringen Schwenkwinkel α (siehe Fig. 4) während des Einsetzens durchläuft und beim axialen Einschieben allmählich mit ihrer Haupterstreckungsachse A_{B} koaxial zur Haupterstreckungsachse Ax des Batterieaufnahmeabschnitts 14 angeordnet wird. Der Schwenkwinkel α beträgt hier vorzugsweise maximal 25°, optional maximal 15°, weiter optional maximal 5°.

Wie insbesondere in den Figuren 2 und 3 dargestellt, ist die Einschuböffnung 18 wahlweise insbesondere antriebslagerseitig, stirnseitig am Rahmenrohr 10 angeordnet. Wir dargestellt, kann sich dabei die Einschuböffnung auch teilweise in die Mantelfläche des Rahmenrohres 10 erstrecken. Insbesondere ist es möglich, dass die Stirnseite als eine orthogonal zur Haupterstreckungsachse Ax definierte Fläche angesehen wird. Weiter ist es möglich, dass die Stirnseitenfläche als eine Fläche angesehen wird, die maximal um einen Winkel ß von dieser orthogonalen Fläche abweichend ausgebildet ist. Dies ist beispielsweise in Fig. 2 dargestellt. Der Winkel ß beträgt hier vorzugsweise maximal ± 25°, optional maximal ± 15° und weiter optional maximal ± 5°. Insbesondere in diesem Zusammenhang ist es denkbar, dass die Mantelfläche des Rahmenrohres 10 im Bereich des Batterieaufnahmeabschnitts 14 zu wenigstens 90 %, insbesondere wenigstens 95 % geschlossen ist.

Wie insbesondere in den Figuren 3 und 4 dargestellt, ist wahlweise seitlich am Rahmenrohr 10 und im Speziellen außerhalb einer axialen Verlängerung 22 des Lichtraumprofils (siehe Fig. 3) des Batterieaufnahmeabschnitts 14 am Rahmenrohr 10 der Antriebslagerbereich 24 ausgebildet, insbesondere umfassend ein Antriebslagergehäuse 26, zur Aufnahme des Hilfsantriebs 28. Die Anordnung ist wahlweise derart gewählt, dass die Batterie 104 seitlich an einem im Antriebslagergehäuse 26 gelagerten Hilfsantrieb 28 vorbei in den Batterieaufnahmeabschnitt 14 einschiebbar ist. Selbiges gilt für ein im Lichtraumprofil ausgebildetes Antriebslagergehäuse; auch dies ist wahlweise so ausbildet und/oder angeordnet, dass eine Batterie daran vorbei in den Batterieaufnahmeabschnitt 14 eingeschoben werden kann. Das Lichtraumprofil ist hier, wie aus dem Stand der Technik bekannt, insbesondere der im Querschnitt eingeschlossene Luftraum, den die Batterie benötigt, um in den Batterieaufnahmeabschnitt eingeschoben zu werden. Insbesondere ist ein Lichtraumprofil im Umfang der Erfindung die definierte Umgrenzungslinie der senkrechten Querebene des Einschubweges der Batterie in den Batterieaufnahmeabschnitt.

Bei dieser Ausführungsform kann das Antriebslagergehäuse 26 umfangsseitig am Rahmenrohr 10 angeschlossen sein, und zwar derart, dass die Batterie seitlich daran bzw. an einem im Antriebslagergehäuse gelagerten Hilfsantrieb 28 vorbei in den Innenraum 12 einschiebbar ist.

Wie insbesondere in Fig. 1 und 2 dargestellt, kann ein Abdeckelement 36 vorgesehen sein, dass die Einschuböffnung 12 überdeckend lösbar am Rahmenrohr 10 und/oder am Antriebslagergehäuse 24 anordbar ist. Dieses Abdeckelement 36 kann insbesondere als Rammschutzelement fungieren.

Um das Einführen der Batterie 104 in den Innenraum zu erleichtern, kann erfindungsgemäß insbesondere im Innenraum 12 des Rahmenrohrs 10 wenigstens ein Teil eines Batterieführungsmittels 30 angeordnet sein, dass eine Schiebeführung zum axialen Einschieben der Batterie 104 in den Batterieaufnahmeabschnitt 14 bildet.

Beispielsweise kann bei dieser Ausführungsform das Batterieführungsmittel 30 wenigstens eine Führungsfeder 32 aufweisen, die beispielsweise integral am Rahmenrohr 10 ausgebildet ist. Komplementär zur Führungsfeder 32 ist in der Batterie 104 optional wenigstens eine dazu wenigstens abschnittsweise komplementär ausgebildete Führungsnut 106 ausgebildet. Führungsfeder 32 und Führungsnut 106 können derart ineinander eingreifen, dass beim axialen Einschieben der Batterie in den Batterieaufnahmeabschnitt 14 die Batterie sicher in den Innenraum 12 des Rohres 10 geführt wird.

Neben der Führungsfeder 32 können auch weitere Führungselemente 34 (siehe z.B. Fig. 9) am Rahmenrohr 10 bzw. anderen Bauteilen des Fahrradrahmens 1 ausgebildet sein, die eine Führung der Batterie in das und im Rahmenrohr garantieren. Diese Führungselemente 34 können darüber hinaus als Lagerelemente und, wie im Folgenden noch im Detail beschrieben, als Batterie-Temporärhaltemittel 54 ausgebildet sein.

Wie insbesondere in den Figuren 3 bis 7 dargestellt, kann das Batterieführungsmittel und insbesondere die Führungsfeder 32 auch über die Einschuböffnung 18 aus dem Batterieaufnahmeabschnitt 14 und insbesondere dem Innenraum 12 des Rahmenrohres 10 axial nach außen ragend ausgebildet sein. Auf diese Weise kann, dies ist beispielsweise auch in Fig. 4 dargestellt, die Batterie sehr einfach in die Führungskopplung, insbesondere zwischen einer Führungsfeder 32 und einer Führungsnut 106 eingesetzt werden.

Grundsätzlich ist es denkbar, wenigstens eine, aber auch eine Mehrzahl an Führungsfedern und Führungsnuten vorzusehen und diese wahlweise am Rahmenrohr bzw. der Batterie auszubilden.

Auch ist es denkbar, dass das Batterieführungsmittel insbesondere in dem nach außen ragenden Bereich ein insbesondere geneigtes Leitelement 31 aufweist, um die Batterie und das daran angeordnete Führungsmittel, hier beispielsweise eine Führungsnut in den Kopplungseingriff mit dem korrespondierenden Gegenführungsmittel, beispielsweise der Führungsfeder 32, zu bringen. Eine solche Ausführungsform ist in Fig. 4 dargestellt. Das Leitelement kann auch wenigstens einen Teil der Führungsfeder selbst bilden.

Wie im Detail in Fig. 9 dargestellt, kann im Innenraum 12 des Rahmenrohres 10 wenigstens eine Kabelzugführung 56, 57 vorgesehen sein, um Kabelzüge im Inneren des Rahmenrohres 10 zu führen. Diese Kabelzüge können beispielsweise Leitungen, Schaltzüge, Bremszüge der dergleichen Elemente sein, wie dies bereits weiter oben definiert wurde. Es ist möglich, solche Kabelzugführungen als offene Kabelzugführungen 56 vorzusehen bzw. als geschlossene Kabelzugführungen 57 vorzusehen. Gerade die offenen Kabelzugführungen 56 erlauben das Führen von Kabelzügen mit großen Steckern oder dergleichen Endelementen, da diese optional insbesondere orthogonal zur Haupterstreckungsachse Ax in diese Kabelzugführung 56 eingeführt werden können. Grundsätzlich, aber insbesondere bei den offenen Kabelzugführungen 56 ist vorzugsweise ein Klemmmittel vorgesehen, um die darin geführten Kabelzüge sicher und insbesondere vibrationsresistent zu halten.

Wie insbesondere in den Figuren 3 bis 7 dargestellt, umfasst der Fahrradrahmen optional auch ein Batteriearretierungsmittel 40, das wahlweise im Innenraum 12 des Rahmenrohres 10 vorgesehen ist. Dieses Batteriearretierungsmittel 40 dient dem Arretieren der Batterie 104 im Batterieaufnahmeabschnitt 14. Es umfasst optional eine Stirnseitenkappe 42, die über die Einschuböffnung 18 in den Innenraum 12 des Rahmenrohres 10 einsetzbar und dort lösbar verriegelbar ist. Auf diese Weise kann eine in den Batterieaufnahmeabschnitt 14 eingeschobene Batterie 104 insbesondere gegen ein axiales Herausschieben verriegelt werden. Die Stirnseitenkappe ist im Detail auch in Fig. 10 dargestellt.

Die Stirnseitenkappe 42 weist wenigstens ein Verriegelungsmittel 44 und das Rahmenrohr 10 wenigstens ein Verriegelungsgegenmittel 46 auf, oder umgekehrt. Die Mittel sind mittels eines Betätigungsmittels 50 miteinander unter Verriegelung der Batterie 104 im Batterieaufnahmeabschnitt 14 miteinander in eine Verriegelungsstellung und unter Freigabe der Batterie 104 im Batterieaufnahmeabschnitt 14 in eine Entriegelungsstellung bringbar.

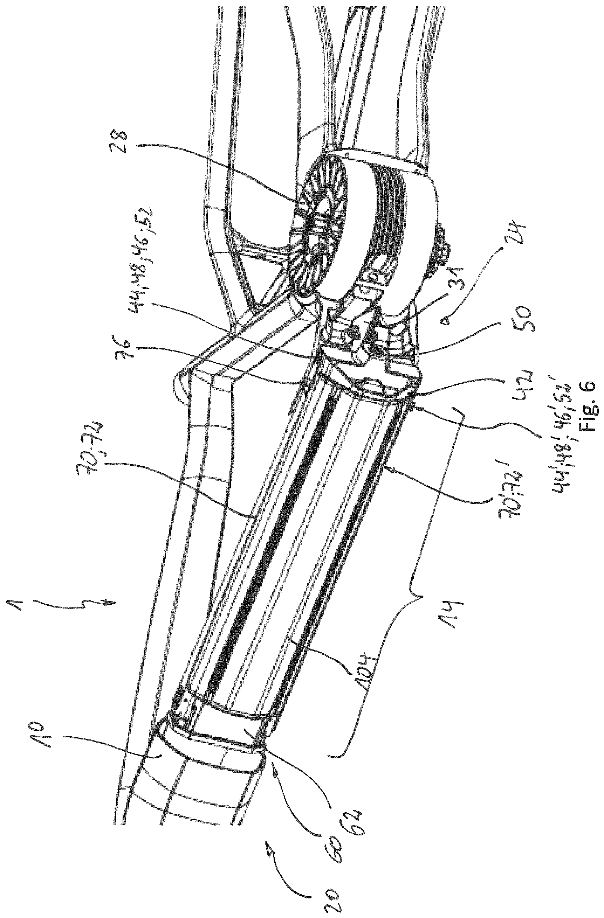

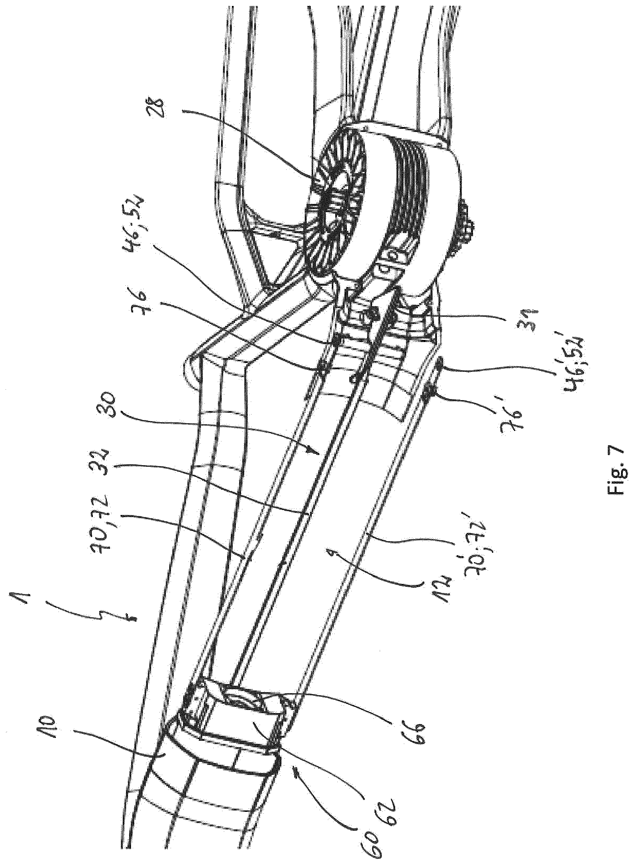

Wie insbesondere in Fig. 10 dargestellt, kann das Verriegelungsmittel 44 wenigstens einen Sperrbolzen 48 aufweisen und das Verriegelungsgegenmittel 46 (siehe hierzu die Figuren 6 und 7) wenigstens eine komplementäre Sperrbolzenaufnahme 52, oder umgekehrt. Der Sperrbolzen 48 kann in Verriegelungsstellung die Stirnseitenkappe 42 verriegelnd in die Sperrbolzenaufnahme 52 eingreifen und in Entriegelungsstellung die Stirnseitenkappe 42 entriegelnd außer Eingriff mit der Sperrbolzenaufnahme stehen. Das hierzu genannte Betätigungsmittel 50 kann beispielsweise eine Federvorspanneinrichtung umfassen, die die Sperrbolzen in die Verriegelungsstellung vorspannt (nicht dargestellt). Wie insbesondere in Fig. 10 dargestellt, können bei einer bestimmten Ausführungsform die Sperrbolzen 48 orthogonal zur Haupterstreckungsachse A_{B} der Batterie hervorstehend und insbesondere elastisch gelagert sein.

Optional weist die Stirnseitenkappe 42 wenigstens einen Teil des Batterieführungsmittels und insbesondere eine Führungsnut 38 und/oder eine Führungsfeder auf.

Verriegelungsmittel und Verriegelungsgegenmittel sind bei einer solchen Ausführungsform vorzugsweise so ausgebildet, dass die Sperrbolzen beim Einschieben kurzzeitig in die Entriegelungsstellung zurückgedrängt werden, um dann wieder in die Verriegelungsstellung zurückzuspringen und insbesondere in die Sperrbolzenaufnahme 52 einzugreifen. Auch ist es denkbar, die Sperrbolzen so auszubilden, dass sie über ein Betätigungsmittel 50 aufweisend einen Hebel, einen Schlüssel oder einen dergleichen Aktuator, wie oben bereits beschrieben, von der Verriegelungsstellung in die Entriegelungsstellung bewegt werden können, um das Einschieben der Batterie in den Batterieaufnahmeabschnitt, optional ohne mit den Sperrbolzenaufnahmen 52 in Kontakt zu kommen bzw. darin einzurasten, zu ermöglichen. Auf ähnliche Weise kann das Betätigungsmittel zur Entriegelung ausgebildet sein, um die in den Sperrbolzenaufnahmen eingerasteten Sperrbolzen wieder in die Entriegelungsstellung zurückzudrängen und so eine Entnahme der Batterie und insbesondere der Stirnseitenkappe 42 zu erlauben. Hier sind sämtliche aus dem Stand der Technik bekannte Verfahren anwendbar.

Grundsätzlich ist es denkbar, Verriegelungsmittel und Verriegelungsgegenmittel mittels des Betätigungsmittels steuerbar auszubilden, um wahlweise eine Verriegelungsstellung, eine Entriegelungsstellung und/oder beides aktiv einnehmen zu können.

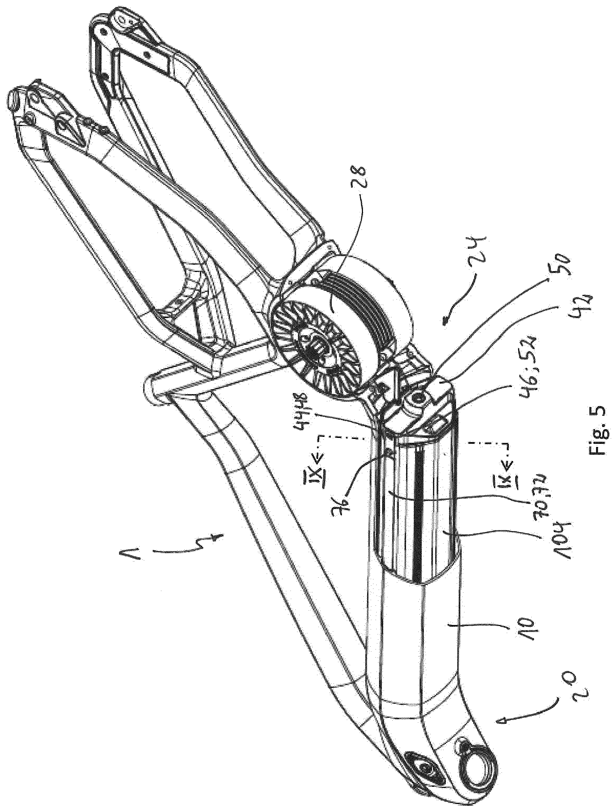

Wie insbesondere in den Figuren 5 bis 9 dargestellt, ist der Fahrradrahmen insbesondere im Innenraum 12 des Rahmenrohres 10 mit einem Schienensystem 70 versehen bzw. ist ein solches in diesen einführbar. Das Schienensystem weist wenigstens eine Schiene 72 auf, die axial in eine, wahlweise integral, am Rahmenrohr 10 ausgebildete komplementäre Schienenaufnahme 74 einschiebbar ist. Das Schienensystem 70 ist am Rahmenrohr 10 mittels eines Festlegemittels 76 und insbesondere einer Schraube gegen eine axiale Bewegung festlegbar. Dies ist beispielsweise u.a. in Fig. 6 dargestellt.

Das Schienensystem 70 weist erfindungsgemäß ein Batteriearretierungsmittel 40 und/oder ein Batterieanschlussmittel 60 auf. Insbesondere ist es möglich, das Schienensystem 70 derart auszubilden, dass es zusammen mit all diesen Mitteln bzw. wenigstens Teilen davon in den Innenraum 12 des Rahmenrohres 10 einschiebbar ist. Das Batteriearretierungsmittel 40 und das Batterieführungsmittel 30 wurden zuvor schon exemplarisch beschrieben.

In Ergänzung dazu gilt, dass optional an den Schienen 72 des Schienensystems 70 insbesondere im Bereich der Einschuböffnung 18 Verriegelungsgegenmittel 46, beispielsweise in Form von Sperrbolzenaufnahmen 52 vorgesehen sind. Um Batterien mit unterschiedlichen Größen mit dem Batteriearretierungsmittel 40 zu verriegeln, können entlang der Schiene 72 unterschiedliche Verriegelungsgegenmittel vorgesehen sein, um so bei unterschiedlichen insbesondere unterschiedlich langen Batterien und/oder unterschiedlich ausgebildeten Verriegelungsmitteln 44 eine Arretierung zu erlauben.

Es ist denkbar, neben oder alternativ zum Batteriearretierungsmittel 40, vorgesehen mit einer Stirnseitenkappe 42, auch andere Batteriearretierungsmittel vorzusehen, die eine Festlegung der Batterie im Batterieaufnahmeabschnitt 14 erlauben. So kann beispielsweise das Batteriearretierungsmittel 40 einen Sperrriegel umfassen, der verschwenkbar am Rahmenrohr und/oder an der Batterie gelagert ist und ein Verriegeln der Batterie im Rahmenrohr erlaubt. Der Sperrriegel kann als Verriegelungsmittel verschwenkbar am Rahmenrohr und/oder der Batterie gelagert sein und in Verriegelungsstellung gegen ein oder in ein Verriegelungsgegenmittel, beispielsweise eine Stirnseite der Batterie bzw. eine komplementäre Aufnahme am Rahmenrohr anstehen.

Im Folgenden wird auf das Batterieanschlussmittel 60 abgestellt, das beispielsweise u.a. in den Figuren 6, 7 und 10 dargestellt ist. Das Batterieanschlussmittel umfasst vorzugsweise und optional im Bereich des zum Lenkkopfbereich 20 weisenden Endes des Rahmenrohres 10 und insbesondere angrenzend an den Batterieaufnahmeabschnitt 14 einen Batteriehub 62 auf, zum Anschluss der in den Batterieaufnahmeabschnitt 14 eingeschobenen Batterie 104. Der Batteriehub 62 wird dabei vorzugsweise am Schienensystem 70 befestigt, sodass er mit diesem zusammen in den Innenraum 12 des Rahmenrohres 10 eingeschoben werden kann, um dort zu verbleiben und mit der Batterie 104, die in den Batterieaufnahmeabschnitt 14 eingeschoben wird, gekoppelt zu werden. Der Batteriehub 62 kann dabei beispielsweise einen Stecker 66 (siehe Fig. 7) aufweisen, der komplementär zu einer Steckeraufnahme 64 (siehe Fig. 10) ausgebildet ist und die Kopplung zwischen Batteriehub 62 und Batterie 104 erlaubt. Stecker bzw. Steckeraufnahme sind dabei vorzugsweise so ausgebildet, dass sie eine magnetische Haftkraft bilden und so beispielsweise die Batterie 104 temporär im Batterieaufnahmeabschnitt 14 insbesondere gegen Einwirken der Schwerkraft in der Entriegelungsstellung klemmfixiert lagern. Bei einer solchen Ausbildungsform ist die temporäre Haftkraft bzw. Verriegelungskraft derart ausgebildet, dass sie manuell durch einen Benutzer über eine Zugkraft entgegengesetzter Richtung zur Einschubrichtung Rx der Batterie in den Batterieaufnahmeabschnitt 14 überwunden werden kann. Die temporäre Batteriesicherung dient dabei vorzugsweise dem bequemen Verriegeln der Batterie 104 im Rahmenrohr 10. Insbesondere bei einer solchen Ausführungsform bildet das Batterieanschlussmittel 60 optional auch das Batterie-Temporärhaltemittel 54.

Es ist auch möglich, das Batterie-Temporärhaltemittel 54 mittels eines Klemmsystems auszubilden, das die Batterie 104 im Batterieaufnahmeabschnitt 14 gegen Einwirken der Schwerkraft in der Entriegelungsstellung klemmfixiert hält. Dies kann beispielsweise durch entsprechend ausgebildete Schienen 72 des Schienensystems 70 erfolgen, die direkt oder indirekt mit einer Klemmkraft, eine Haftkraft resultierend, an der Batterie 104 anliegen. Selbiges kann auch über entsprechend ausgebildete Batteriehaltemittel 54, beispielsweise integral am Rahmenrohr ausgebildet, erreicht werden. Diese sind beispielsweise in Fig. 9 dargestellt. Solche Batteriehaltemittel sind vorzugsweise elastisch ausgebildet. Vorzugsweise sind solche Batterie-Temporärhaltemittel als elastische Temporärhaltemittel und insbesondere Klemmmittel ausgebildet. Zudem können sie als Batterieführungsmittel und Batterielagermittel ausgebildet sein.

Wie in Fig. 1 dargestellt, umfasst der erfindungsgemäße Fahrradrahmen 1 optional wenigstens ein im Ausfallende 8 integriertes Lichtelement 80 und weiter optional ein inkrementelles Messwegesystem, mit wenigstens einem, hier beispielsweise am Vorderrad 3 angeordneten Messring 92 als Teil des inkrementellen Wegemesssystems, beispielsweise für eine Tachometereinheit. Es ist denkbar dieses Messwegesystem und insbesondere den Messring auch oder alternativ im Bereich des Hinterrades anzuordnen.

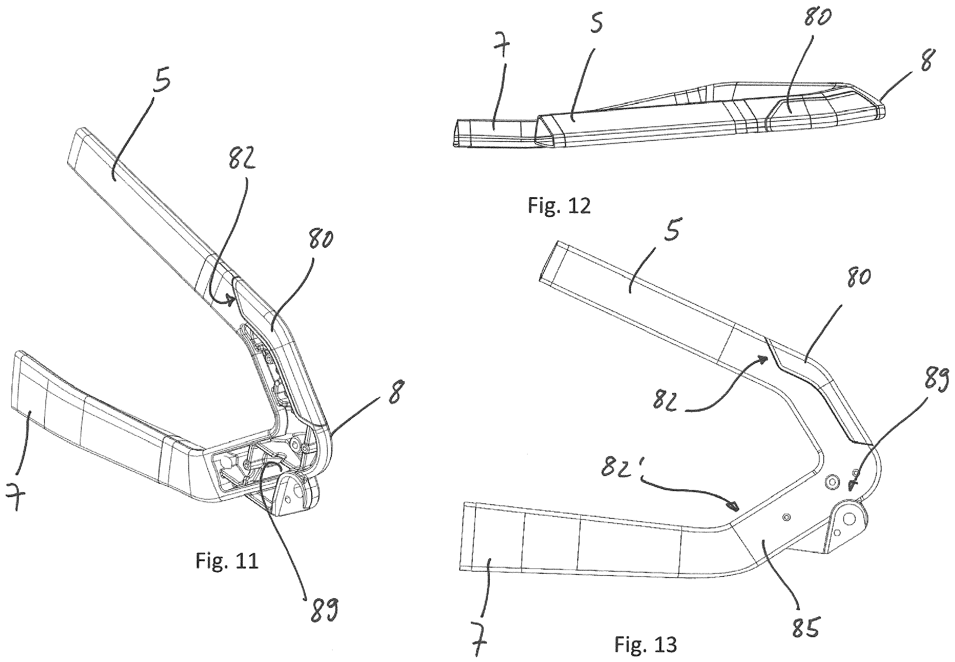

Auf diese beiden Eigenarten wird in den Figuren 11 bis 17 im Detail eingegangen.

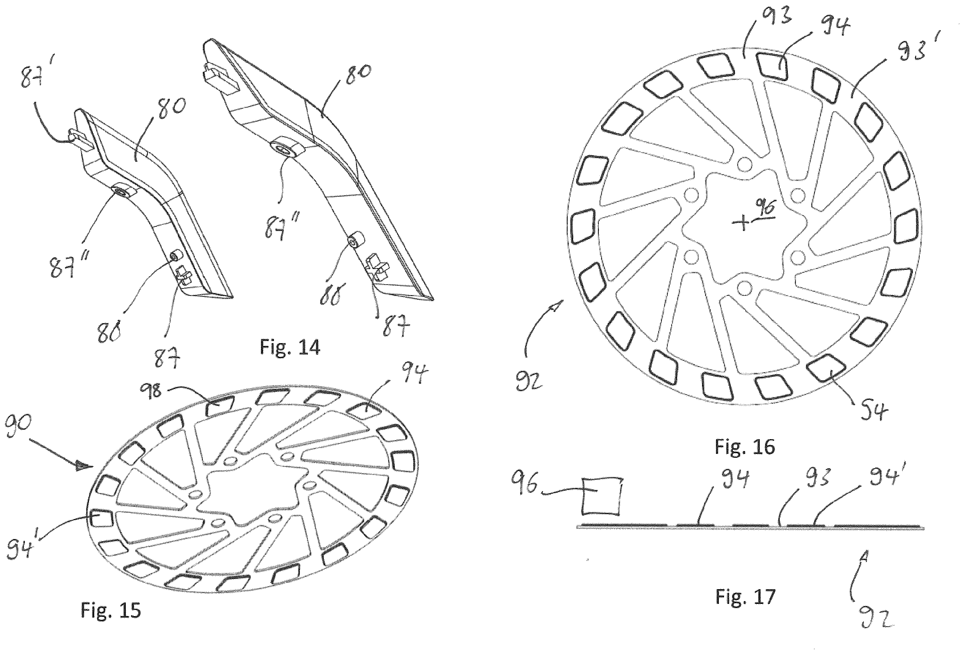

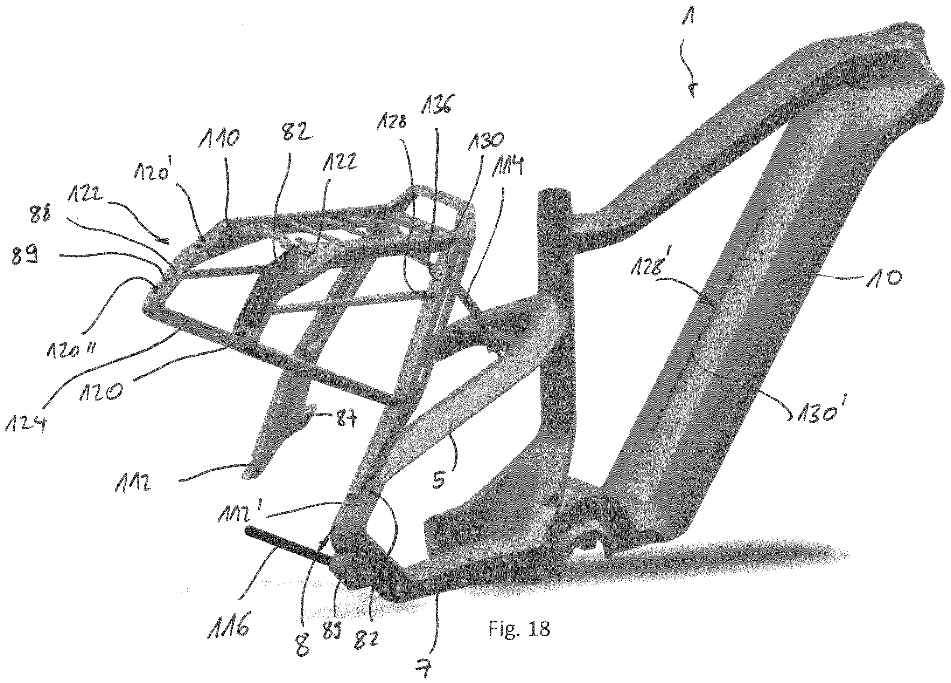

Die Figuren 11 bis 14 zeigen im Detail wenigstens ein in Fig. 1 dargestelltes, im Ausfallende 8 integriertes Lichtelement 80. Es sei erwähnt, dass ein solches Lichtelement 80 nicht nur in Verbindung mit dem hier dargestellten Fahrradrahmen 1, sondern mit jeder Art von Fahrradrahmen ihre Anwendung finden kann. Das Lichtelement 80 ist hier in das Ausfallende 8 und insbesondere oberflächenbündig in das Ausfallende 8 integriert. Dazu weist das Ausfallende 8 eine Aussparung 82 auf, in die das Lichtelement 80 eingesetzt und mittels Befestigungselementen fixiert werden kann. Der Zugang zum Montagebereich kann optional durch ein Abdeckelement 85 abgedeckt werden, wie dies in Fig. 13 dargestellt ist Die Befestigungselemente greifen vorzugsweise in Befestigungselementaufnahmen 88 ein (siehe Fig. 14, exemplarisch darstellend eine linksseitige und eine rechtsseitige Ausführungsform des Lichtelementes 80 zum Einsetzten in ein linksseitiges und ein rechtsseitiges Ausfallende 8). Die Befestigungselemente können optional Bolzen oder dergleichen Schraub- oder lösbare Fixiermittel sein. Weiter vorgesehen sind Führungen 87, die in entsprechende Führungsaufnahmen 89 (siehe Fig. 18 für eine weitere vergleichbare Ausführungsform einer Aufnahme) am Ausfallende 8 eingreifen und so insbesondere eine Vorpositionierung des Lichtelements 80 in der Aussparung 82 erlauben.

Das Lichtelement 80 ist vorzugsweise derart ausgebildet, dass es von der Fahrradrückseite, aber auch seitlich zum Fahrrad erkennbar ist. Vorzugsweise ist es oberhalb der Achsaufnahme 89 zur Aufnahme des Hinterrades 6 angeordnet. Optional sind linksseitige und rechtsseitige Lichtelemente eines Fahrradrahmens identisch ausgebildet.

Das Lichtelement 80 kann beispielsweise als Rücklicht, als Bremslicht, aber auch als Blink- oder dergleichen Licht ausgeführt werden, um eine Signalisierung beim Betrieb des Fahrrades zu erlauben.

Insbesondere in Verbindung mit einem batteriebetriebenen Fahrrad 100, wie es in Fig. 1 dargestellt ist, hat ein solches in das Ausfallende 8 eingebundene Lichtelement 80 eine vorteilhafte Funktion.

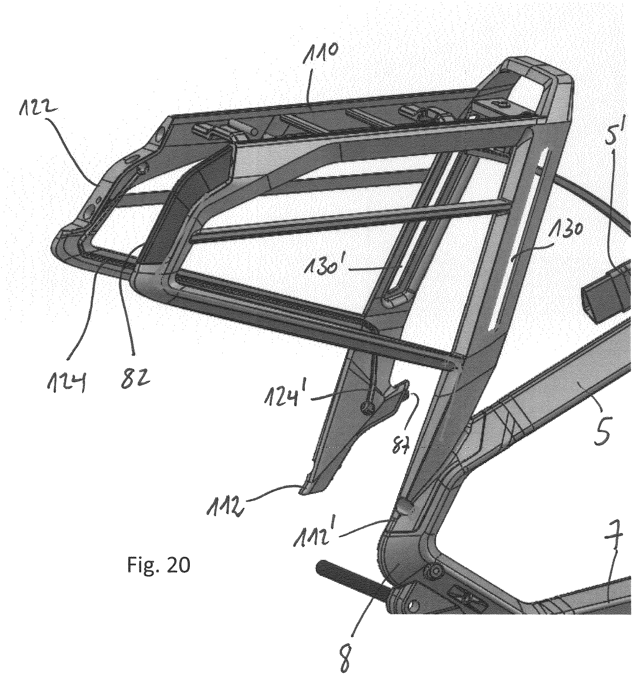

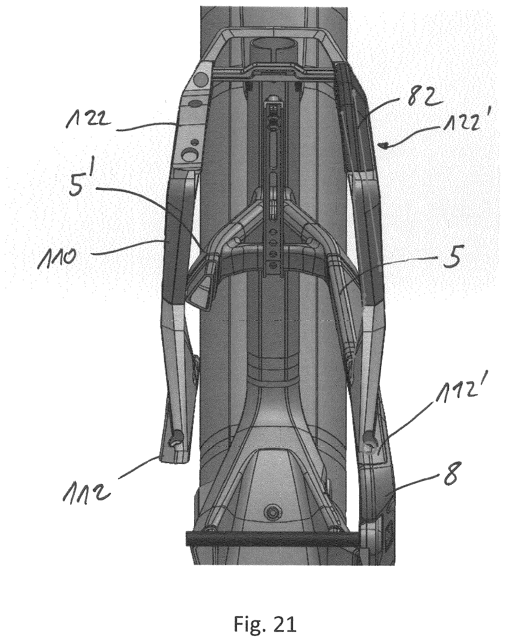

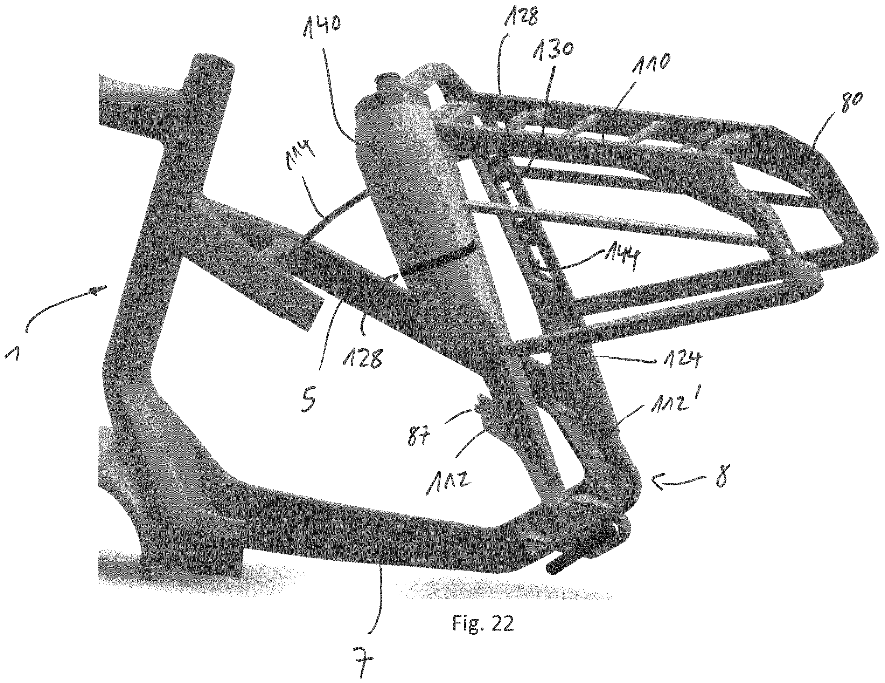

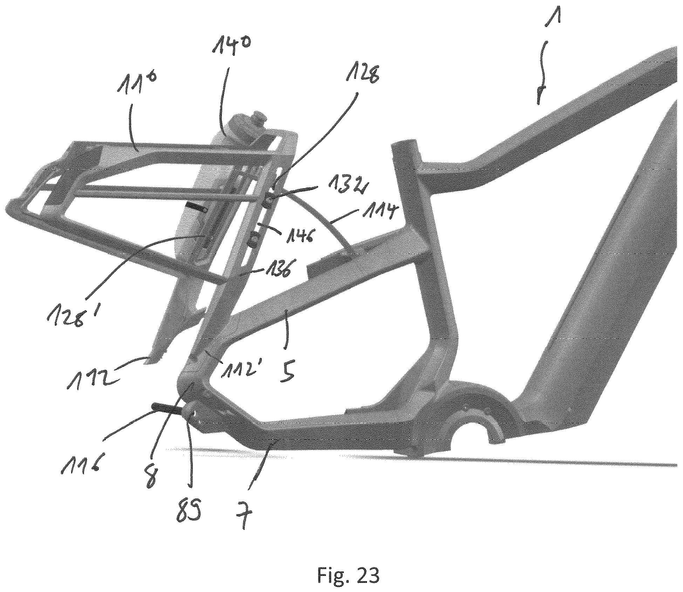

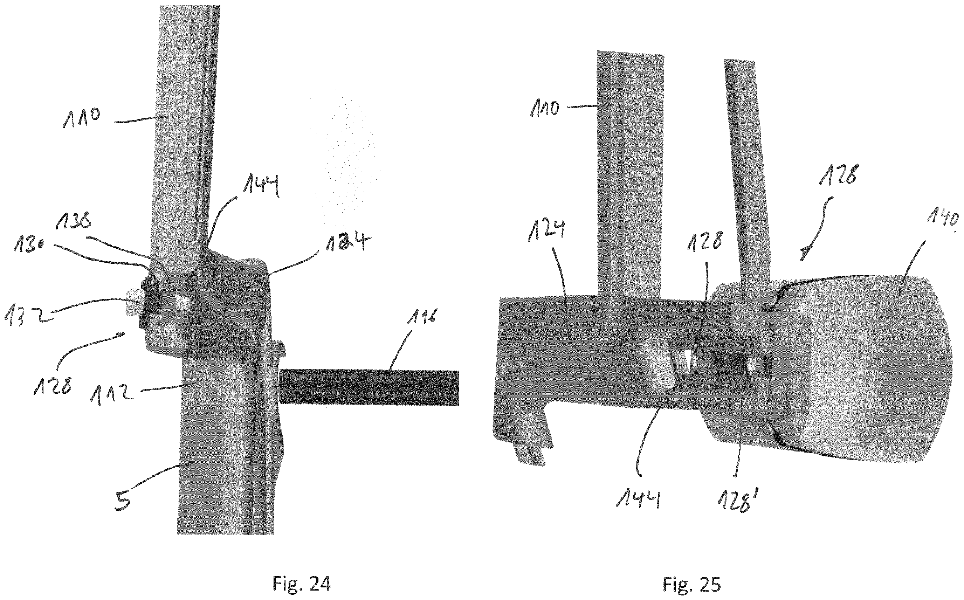

Wie in den Figuren 18 - 25 exemplarisch gezeigt, ist es möglich, an dem zuvor beschriebenen Fahrradrahmen einen Gepäckträger 110 zu befestigen. Der Gepäckträger 110 weist dazu wenigstens einen Aufnahmeschuh 112 auf, der komplementär zu der Aufnahme 82 für ein Lichtelement 80 (siehe beispielsweise Fig. 1) am Fahrradrahmen 1 und insbesondere am Ausfallende 8 des Fahrerrahmens ausgebildet ist. Ganz grundsätzlich gilt, dass ein solcher Gepäckträger 110, wie er im Folgenden beschrieben wird, an jeder Art von Fahrradrahmen befestigt werden kann, der eine entsprechend zu dem genannten Aufnahmeschuh 112 komplementäre Aufnahme 82. Diese Aufnahme 82 dient u.a. der Aufnahme eines Lichtelementes 80, wie es hierin bereits beschrieben wurde. Insofern gilt in Bezug auf diese Aufnahme, das Lichtelement und sämtliche damit korrespondierenden Bauteile identisches wie hierin erwähnt.

Wesentlich ist das Bereitstellen eines Gepäckträgers 110, umfassend wenigstens einen Aufnahmeschuh 112, der komplementär zu einer Aufnahme 82 für ein Lichtelement 80 an einem Fahrradrahmen ausgebildet ist. Der Aufnahmeschuh 112 ist derart ausgebildet, dass er anstelle des und/oder in Ergänzung mit und/oder in Kombination mit dem Lichtelement 80 in der Aufnahme 82 befestigt werden kann, um den Fahrradträger 110 am Fahrradrahmen 1 zu befestigen.

Unter Gepäckträger 110 wird jedes Anbauteil verstanden, das der Lagerung, Fixierung und/oder dem Transport von Gepäck dienen kann. Darüber hinaus werden aber auch solche Anbauteile verstanden, die der Fixierung weiterer Anbauteile, beispielsweise Schutzblechen, Beleuchtungen etc. dienen.

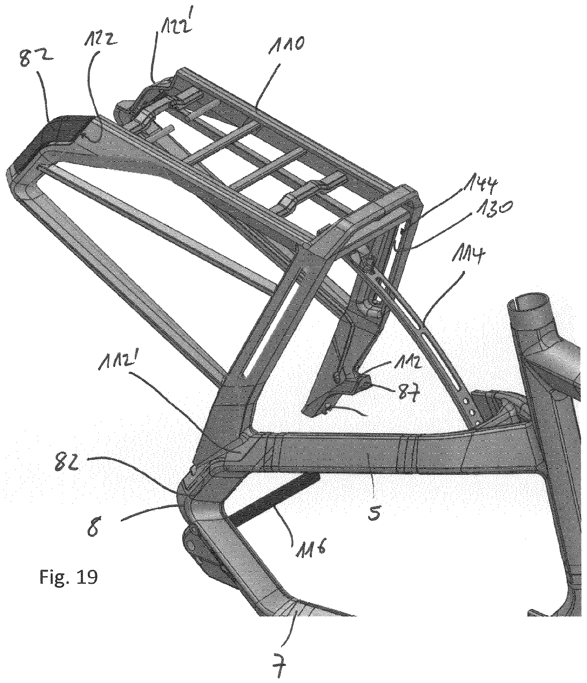

In den Figuren 19 ff ist der Fahrradrahmen 1 im Detail und teilgeschnitten dargestellt. So sind zur Verdeutlichung des Aufnahmeschuhs 112 des Gepäckträgers 110 die linksseitige Sitzstrebe 5, die linksseitige Kettenstrebe 7, und das korrespondierende Ausfallende 8 nicht dargestellt. Diese Bauteile entsprechen insbesondere spiegelverkehrt jedoch den rechtsseitigen korrespondierenden Bauteilen 5, 7, 8. Weiter teildargestellt ist eine Achse 116 zur Aufnahme eines Hinterrades.

Optional ist wenigstens ein Halteelement 114 vorgesehen, um den Fahrradträger 110 zusätzlich am Fahrradrahmen 1 und insbesondere an wenigstens einem ortsfest zu wenigstens einem Ausfallende 8 gelagerten Bauteil des Fahrradrahmens zu befestigen. Dieses Halteelement 114 kann beispielsweise ein Stabelement, ein Blechelement oder dergleichen Zug- oder Druckstab sein, der eine Kraftkopplung zwischen Fahrradträger und Fahrradrahmen herstellt. Das Halteelement kann als Trägerelement für ein Schutzblech oder dergleichen weitere Anbauteile (nicht dargestellt) ausgebildet werden. Wie im Folgenden noch beschrieben kann das Halteelement wenigstens ein Befestigungsmittel 128 aufweisen.

Optional umfasst der Aufnahmeschuh 112 Befestigungselementaufnahmen 88, zur Aufnahme von Befestigungselementen, über die der Aufnahmeschuh 112 und somit der Gepäckträger 110 am Fahrradrahmen 1 befestigt werden kann. Das können Durchführungen aber auch Arretierungsmittel wie Gewinde sein. Die Befestigungselemente sind vorzugsweise die Befestigungselemente und/oder von den Abmessungen identische Befestigungselemente, die auch der Festlegung der Lichtelemente 80 in den jeweiligen Aufnahmen 82 dienen. Optional weist der Aufnahmeschuh 112 wenigstens eine Führung 87 auf, die in wenigstens eine entsprechende Führungsaufnahme (nicht dargestellt) am Ausfallende 8 und/oder der Aussparung 82 eingreifen und so insbesondere eine Vorpositionierung des Aufnahmeschuhs 112 in der Aussparung 82 erlauben. Führung 87 und/oder Befestigungselementaufnahme sind optional identisch zu Führung 87 bzw. Befestigungselementaufnahme 88 am Lichtelement 80 ausgebildet. Die Befestigungselementaufnahmen 88 sind optional Bolzendurchführungen. Die Befestigungselemente sind optional Bolzen oder dergleichen Schraub- oder lösbare Fixiermittel. Optional sind Befestigungselementaufnahmen 88 insbesondere in Form von Bolzendurchführungen oder dergleichen Durchführungen auch einer Aufnahme 122 und/oder Aufnahme 82 vorgesehen. Diese sind beispielsweise in Fig. 18 dargestellt; sie dienen beispielsweise der Durchführung von genannten Befestigungselementen, also optional Bolzen oder dergleichen Schraub- oder lösbaren Fixiermitteln. Diese werden dann an den Befestigungselementaufnahmen 88 am Lichtelement 80 festgelegt.

Optional ist es denkbar, einen solchen Aufnahmeschuh 112 als eigenständiges Bauteil vorzusehen, der über Befestigungsaufnahmen verfügt, um daran Gepäckträger oder dergleichen Anbauteile zu befestigen. Auf diese Weise können sehr einfach Anbauteile an einem Fahrradrahmen befestigt werden. Es ist also wesentlich, dass erfindungsgemäß nicht nur ein Gepäckträger mit insbesondere integral ausgebildetem Aufnahmeschuh 112 zur Verfügung gestellt wird, sondern alternativ oder in Kombination auch ein Aufnahmeschuh, der den Anschluss eines solchen Gepäckträgers oder dergleichen Anbauteilen erlaubt. Hierzu können beispielsweise Bolzenaufnahmen, Einsetztaufnahmen, Befestigungsösen etc. am Aufnahmeschuh zur Festlegung des Gepäckträgers oder der anderen Anbauteile vorgesehen sein. Optional ist der Aufnahmeschuh integral mit dem Gepäckträger ausgebildet, es ist aber auch denkbar, den Aufnahmeschuh insbesondere lösbar am Gepäckträger zu befestigen. Auf diese Weise kann eine Vielzahl unterschiedlicher Gepäckträger mit entsprechenden Aufnahmeschuhen verbunden werden, um sie mit einem Fahrradrahmen mit Aufnahmen 82 zu verwenden.

Optional weist der Gepäckträger 110 selbst insbesondere an seinem hinteren Ende Aufnahmen 122 auf, die der Aufnahme wenigstens eines Lichtelementes 80 dienen. Hier gilt alles, was zuvor zu einem Fahrradrahmen mit Lichtelement 80 in einer Aufnahme 82 genannt wurde, identisch. Optional ist darüber hinaus die Aufnahme 122 derart ausgebildet, dass das Lichtelement 80, das in der Aufnahme 82 des Fahrradrahmens 1 positionierbar ist, auch in der Aufnahme 122 des Gepäckträgers positionierbar und dort festlegbar ist. Ein zur Aufnahme des Fahrradträgers 110 aus seiner Aufnahme 82 entferntes Lichtelement 80 ist also optional in eine korrespondierende Aufnahme 122 am Gepäckträger einsetzbar und dort als Lichtelement verwendbar. Insbesondere weist es wenigstens einen Teil und/oder weitere der Beleuchtungsfunktionen auf, die es in seiner Aufnahme am Fahrradrahmen hatte. Der Bereich der Aufnahme 122, der der Aufnahme und Festlegung des Lichtelementes 80 dient, ist vorzugsweise identisch und insbesondere hinsichtlich der Aufnahme-, Positionierungs- und Befestigungsmittel identisch zur Aufnahme 82 am Fahrradrahmen 1 ausgebildet.

Vorzugsweise sind an beiden Ausfallendenden 8 des Fahrradrahmens 1 und insbesondere symmetrisch zur Haupterstreckungsachse des Fahrrades Aufnahmen 82 und am Gepäckträger 110 korrespondierende Aufnahmeschuhe 112 ausgebildet.

Optional sind die Befestigungsmittel, Führungsmittel oder dergleichen Aufnahmemittel am Aufnahmeschuh 112 ausgebildet, die identisch zu entsprechenden Mitteln am Lichtelement ausgebildet sind. Die Aufnahme 82 ist optional so ausgebildet, dass sie über den Gepäckträger eingeleitete Normallasten über wenigstens eine Lägerfläche 120 wenigstens teilweise als Normalkräfte in den Fahrradrahmen ableiten kann. Es ist auch möglich, den Aufnahmeschuh derart in der Aufnahme zu befestigen, dass eine Kraftableitung wenigstens teilweise über Reibschluss erfolgt.

Optional weist der Fahrradträger Kabelführungsmittel 124 auf, die insbesondere zwischen dem Aufnahmeschuh 112 des Gepäckträgers 110 und der Aufnahme 122, insbesondere zur Aufnahme eines Lichtelementes 80 verlaufen. Über diese Kabelführungsmittel kann insbesondere eine elektrische Verbindung zwischen einem Anschlussmittel, ausgebildet zur elektrischen Kopplung mit einem Anschlussgegenmittel am Lichtelementes 80, das in der Aufnahme 82 am Fahrradrahmen befestigt ist, und einem Anschlussgegenmittel am Lichtelement 80, wenn es in der Aufnahme 122 des Gepäckträgers 110 aufgenommen ist, hergestellt werden. Optional sind in dem Kabelführungsmittel Kabel ortsfest verlegt und zwar derart, dass beim Einsetzen der Aufnahmeschuhe 112 in die Aufnahmen 82 eine Verbindung der Kabel mit Kabeln am Fahrradrahmen, insbesondere zur elektrischen Versorgung der dort in die Aufnahmen 82 einsatzbaren Lichtelemente 80, ohne Werkzeug möglich ist. Die Kabel weisen optional Anschlussmittel und/oder Anschlussgegenmittel zur Verbindung mit dem Lichtelement und/oder mit Kabeln im Fahrradrahmen auf. Es ist möglich, Anschlussmittel und/oder Anschlussgegenmittel so auszubilden, dass eine elektrische Konnektierung beim Einsetzen des Lichtelementes in die Aufnahme erfolgt. Dazu weist beispielsweise das Lichtelement 80 ein Anschlussmittel auf und die Aufnahme 82 und/ oder die Aufnahme 112 ein Anschlussgegenmittel auf, oder umgekehrt, die derart ausgebildet sind, das eine elektrische Verbindung zwischen Anschlussmittel und Anschluss Gegenmittel beim Einsetzen des Lichtelementes in die Aufnahme hergestellt wird.

Das Lichtelement kann in der Aufnahme 122 des Gepäckträgers 110 und/oder der Aufnahme 82 des Fahrradrahmens 1 als Rücklicht, Blinklicht, Bremslicht, Signallicht, Richtungsanzeiger oder jeder anderen Art von Signallampe dienen. Das Lichtelement kann darüber hinaus einen Reflektor aufweisen.

Optional ist am Gepäckträger 110 ein Befestigungsmittel 128 zur Befestigung weiterer Anbauteile vorgesehen. Das Befestigungsmittel 128 ist nicht nur an dem Gepäckträger 110, sondern an jedem anderen Anbauteil und am Fahrrad 1 selbst anwendbar. Exemplarisch ist das Befestigungsmittel 128 auch am Unterrohr 10 des Fahrradrahmens 1 (siehe Fig. 18) dargestellt.

Das Befestigungsmittel 128 umfasst ein Schlitzelement 130, das der Aufnahme eines Haltemittels 132 zur Befestigung eines Anbauteile140 dienen kann. Das Haltemittel 132 kann ein Bolzen sein, eine Schraube, ein Klemmmittel oder jede andere Art von Haltemittel, das durch den Schlitz des Schlitzelementes 130 geschoben und am Anbauteil 140 unter Fixierung des Anbauteils am Schlitz befestigt werden kann. Das Schlitzelement 130 kann beispielsweise in einer Seitenstrebe 136 des Gepäckträgers 110 und insbesondere einer Seitenstrebe, die direkt mit dem Aufnahmeschuh 112 verbunden ist, vorgesehen sein. Es ist auch möglich, ein solches Schlitzelement 130 in dem Halteelement 114 vorzusehen.

Das Schlitzelement kann beispielsweise eine Schlitznut mit geschlossenem Boden, insbesondere zur Aufnahme eines Nutensteins und/oder ein Schlitz mit in Axialrichtung des Schlitzes verlaufendem länglichem Freiraum 146 sein, der insbesondere einen Aufnahmeraum mit achsenparallelen Seitenwänden definiert.

Durch oder in das Schlitzelement kann beispielsweise ein Haltemittel 132 in Form eines Bolzens, oder dergleichen Schraub- oder lösbaren Fixiermittels etc. ein- bzw. hindurchgeschoben und mittels eines Konterelementes 138 im, am und/oder hinter dem Schlitz fixiert werden. Das Konterelement 138 kann ein eigenes Bauteil sein, es kann aber auch am Anbauteil 140 vorgesehen sein. Über das Schlitzelement ist optional eine Längsverschiebbarkeit der Montageposition des Anbauteils entlang der Achse des Schlitzelementes gewährleistbar.

Das Schlitzelement 130 weist insbesondere auf seiner dem Anbauteil 140 im montierten Zustand abgewandten Seite vorzugsweise eine 144 Nut auf, die der Aufnahme wenigstens eines Teils des Haltemittels 132 oder eines Konterelementes 128 dient, also beispielsweise eines Bolzenkopfes . Diese Nut erstreckt sich optional wenigstens abschnittsweise entlang des Schlitzes, insbesondere um so eine Längsverschiebbarkeit des Bolzenkopfes bzw. des Konterelementes, insbesondere zusammen mit dem Anbauteil zu gewährleisten. Optional erstreckt sich die Nut 144 entlang des gesamten Schlitzes. Optional ist das Anbauteil entlang des Schlitzes verschiebbar und in einer Mehrzahl an Positionen am Schlitz festlegbar.

Über das beschriebene Schlitzelement kann, beispielsweise bei dem hier gezeigten Fahrradträger, ein Flaschenhalter, wenigstens eine Gepäcktasche, ein Beleuchtungselement etc. sehr einfach befestigt werden.

Wie weiter in Fig. 1 dargestellt, umfasst das Fahrrad 100 wahlweise ein inkrementelles Wegemesssystem, dessen Teil ein Messring 92 und ein damit operierendes Sensormittel 96. Es sei darauf hingewiesen, dass ein solches Messsystem und insbesondere der Messring 92, hier exemplarisch auf einer Bremsscheibe 90 befestigt, nicht nur bei dem erfindungsgemäßen Fahrrad 100, sondern bei jeder Art von Fahrrad angewendet werden können. Wie erwähnt ist optional auf der hier dargestellten Bremsscheibe 90 der Messring 92 ausgebildet oder befestigt. Der Messring 92 ist optional rotationssymmetrisch zu einer Achsmitte 96 ausgebildet, die im montierten Zustand am Fahrradvorderreifen 3 co-axial zur Montageachse (nicht dargestellt) angeordnet ist. Der Messring 92 weist eine Mehrzahl an Messerhebungen 94 auf, die in Form von Ausprägungen aus dem Messring 92 hervorstehen und optional im montierten Zustand (siehe Fig. 1) in Richtung eines Sensormittels 96 weisen bzw. in geringeren Abstand an diesem vorbeirotieren als deren Umrandungen 93. Es ist optional auch möglich, die Erhebungen in eine vom Sensormittel 96 wegweisenden Richtung auszubilden, so dass in Rotation die Umrandungen 93, Umlaufend die Erhebungen 94 näher am Sensormittel 96 liegen als die Erhebungen.

Das Sensormittel ist dazu ausgebildet, die Erhebungen 94 bzw. bei der anderen zuvor erwähnten Ausführungsform die Umrandungen 93 während ihrer Rotation am Messsensor 96 vorbei zu detektieren. Aus dem Stand der Technik ist es bekannt, ein solches inkrementelles Messwegesystem mittels eines Messrings zur Verfügung zu stellen, bei der der Messring Aussparungen aufweist und der Messsensor diese Aussparungen bzw. die Stege zwischen den Aussparungen detektiert. Ein solches Messsystem ist jedoch fehleranfällig; es galt, es zu verbessern.

Das nunmehr vorgestellt inkrementelle Messwegesystem umfassend den Messring 92 und die darauf ausgebildeten Erhebungen 94 stellt ein sehr viel besseres und zuverlässigeres System zur Verfügung.

Insbesondere ist es denkbar, dass wenigstens eine Erhebung 94 größer oder kleiner ausgebildet ist als die restlichen Erhebungen. Es stellt somit ein Eichelement 98 zur Verfügung, das insbesondere eine Manipulation der Messergebnisse verhindern kann. So kann beispielsweise durch eine entsprechend zugeordnete Auslöseeinheit, beispielsweise am Tacho 99 des Fahrrades (siehe beispielsweise Fig. 1), ein Messverfahren initiiert werden, bei dem die Umdrehungen der Messrings 92 anhand des Durchlaufs des Eichelements 98 gezählt werden. Eine Manipulation des Geschwindigkeitsmesssystems kann so erschwert werden. Insbesondere im Zusammenhang mit einem batteriebetriebenen Fahrrad gemäß der vorliegenden Anmeldung haben ein solches inkrementelles Wegemesssystem und insbesondere die Messring 92 einen besonderen Vorteil. Die größere Ausbildung wenigstens einer Erhebung 94 bzw. des Eichelementes 98 bezieht sich hier optional auf die Länge in Umfangsrichtung, also die Länge, die am Sensormittel während der Rotation vorbeiläuft. Optional ist also das Eichelement 98 in Umfangsrichtung betrachtet länger als die restlichen Erhebungen 94 und insbesondere um wenigstens 5%, weiter optional um wenigstens 10% länger.

Die Beschreibung der vorliegenden Systeme und/oder Verfahren haben lediglich veranschaulichenden Charakter; sie ist nicht als eine Einschränkung der beiliegenden Ansprüche auf eine bestimmte Ausführungsform oder Gruppe von Ausführungsformen zu verstehen. Bei der Interpretation der beiliegenden Ansprüche gilt, dass das Wort "umfassend" das Vorhandensein anderer Elemente oder Aktionen als diejenigen, die in einem bestimmten Anspruch aufgeführt sind, nicht ausschließt; das Wort "ein" oder "einer/eine/eines", das einem Element vorausgeht, soll das Vorhandensein einer Mehrzahl solche Elemente nicht ausschließen; jegliche Bezugszeichen in den Ansprüchen schränken ihren Umfang nicht ein. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

## Patentansprüche

1. Fahrradrahmen (1) für ein Fahrrad (100) mit batteriebetriebenem Hilfsantrieb (28), umfassend wenigstens ein Rahmenrohr (10), das in seinem Innenraum (12) einen axial verlaufenden Batterieaufnahmeabschnitt (14) aufweist, zur Aufnahme einer Batterie (104) für den Hilfsantrieb (28), wobei der Batterieaufnahmeabschnitt (14) eine stirnseitig (16) verlaufende Einschuböffnung (18) aufweist, über die die Batterie (104) mit ihrer Stirnseite (102) voraus in den Batterieaufnahmeabschnitt (14) einschiebbar ist, wobei ein Schienensystem (70) vorgesehen ist, das wenigstens eine axial verlaufende Schiene (72) aufweist, die axial in eine, wahlweise integral am Rahmenrohr (10) ausgebildete komplementäre Schienenaufnahme (74) einschiebbar ist, und das axial in den Innenraum (12) des Rahmenrohres (10) einführbar und am Rahmenrohr (10) mittels eines Festlegemittels (76) gegen eine Axial-Bewegung festlegbar ist, und das ein Batterieführungsmittel (30) aufweist, welches eine Schiebeführung zum axialen Einschieben der Batterie (104) in den Batterieaufnahmeabschnitt (14) bildet,
**dadurch gekennzeichnet, dass**
das Rahmenrohr (10) ein Unterrohr ist, das zwischen einem Lenkkopfbereich (20) und einem Antriebslagerbereich (24) verläuft,
und dass das Schienensystem (70) ein Batteriearretierungsmittel (40) aufweist, ausgebildet, um die Batterie (104) im Batterieaufnahmeabschnitt und gegen axiales Herausschieben zu verriegeln, und/oder ein Batterieanschlussmittel (60) aufweist, zum Anschluss der in den Batterieaufnahmeabschnitt eingeschobenen Batterie, wobei das Batterieanschlussmittel einen Batteriehub (62) aufweist, der am Schienensystem (70) befestigt ist, wobei das Schienensystem (70) derart ausgebildet ist, dass es zusammen mit dem Batteriearretierungsmittel (40) und/oder dem Batteriehub (62) in den Innenraum (12) des Rahmenrohres (10) einschiebbar ist.

2. Fahrradrahmen nach Anspruch 1,
**dadurch gekennzeichnet, dass**
das Unterrohr, entlang der Haupterstreckungsebene des Fahrradrahmens, welche in Bezug auf den Fahrradrahmen von hinten nach vorne und in Radebene verläuft, von vorne nach hinten betrachtet, schräg nach unten geneigt ausgebildet ist.

3. Fahrradrahmen nach Anspruch 1 oder 2,
**dadurch gekennzeichnet, dass**
die Batterie (104) entlang einer Einschubrichtung (R_{X}) axial zur Haupterstreckungsachse (A_{X}) des Batterieaufnahmeabschnitts (14) in den Batterieaufnahmeabschnitt (14) einschiebbar ist.

4. Fahrradrahmen nach einem der vorhergehenden Ansprüche,
**dadurch gekennzeichnet, dass**
die Einschuböffnung (18) wenigstens teilweise insbesondere Antriebslagerseitig stirnseitig am Rahmenrohr (10) angeordnet ist.

5. Fahrradrahmen nach einem der vorhergehenden Ansprüche,
**dadurch gekennzeichnet, dass**
die Mantelfläche des Rahmenrohres (10) im Bereich des Batterieaufnahmeabschnitts (14) zu wenigstens 90%, insbesondere wenigstens 95% geschlossen ist.

6. Fahrradrahmen nach einem der vorhergehenden Ansprüche,
**dadurch gekennzeichnet, dass** seitlich am Rahmenrohr und im speziellen außerhalb einer axialen Verlängerung (22) des Lichtraumprofils des Batterieaufnahmeabschnitts (14) am Rahmenrohr (10) der Antriebslagerbereich (24) ausgebildet ist, insbesondere umfassend ein Antriebslagergehäuse (26), zur Aufnahme des Hilfsantriebs (28), und zwar derart, dass die Batterie (104) seitlich an dem im Antriebslagergehäuse (26) gelagerten Hilfsantrieb (28) vorbei in den Batterieaufnahmeabschnitt (14) einschiebbar ist.

7. Fahrradrahmen nach einem der vorhergehenden Ansprüche,
**dadurch gekennzeichnet, dass**
das Batterieführungsmittel (30) wenigstens eine Führungsfeder (32) und die Batterie (104) wenigstens eine dazu wenigstens abschnittsweise komplementäre Führungsnut (106) aufweisen, oder umgekehrt.

8. Fahrradrahmen nach Anspruch 7,
**dadurch gekennzeichnet, dass**
die Führungsfeder (32) über die Einschuböffnung (18) aus dem Batterieaufnahmeabschnitt (14) und insbesondere dem Innenraum (12) axial nach Außen ragt.

9. Fahrradrahmen nach einem der vorhergehenden Ansprüche,
**dadurch gekennzeichnet, dass**
das Batteriearretierungsmittel (40) eine Stirnseitenkappe (42) umfasst, die über die Einschuböffnung (18) in den Innenraum (12) des Rahmenrohres (10) einsetzbar und dort lösbar verriegelbar ist und so die in den Batterieaufnahmeabschnitt (14) eingeschobene Batterie (104) gegen das axiale Herausschieben verriegelt.

10. Fahrradrahmen nach Anspruch 9,
**dadurch gekennzeichnet, dass**
die Stirnseitenkappe (42) wenigstens ein Verriegelungsmittel (44) und die Schiene (72) des Schienensystems (70) wenigstens ein Verriegelungsgegenmittel (46) aufweisen, oder umgekehrt, die mittels eines Betätigungsmittels (50) miteinander unter Verriegelung der Batterie (104) im Batterieaufnahmeabschnitt (14) in eine Verriegelungsstellung und unter Freigabe der Batterie (104) im Batterieaufnahmeabschnitt (14) in eine Entriegelungsstellung bringbar sind.

11. Fahrradrahmen nach Anspruch 10,
**dadurch gekennzeichnet, dass**
das Verriegelungsmittel (44) wenigstens einen Sperrbolzen (48) aufweist, und
das Verriegelungsgegenmittel (46) wenigstens eine komplementäre Sperrbolzenaufnahme (52), oder umgekehrt, wobei der Sperrbolzen (48) in Verriegelungsstellung die Stirnseitenkappe (42) verriegelnd in die Sperrbolzenaufnahme (52) eingreift und in Entriegelungsstellung die Stirnseitenkappe (42) entriegelnd außer Eingriff mit der Sperrbolzenaufnahme (52) steht.

12. Fahrradrahmen nach einem der Ansprüche 10 oder 11, wenn abhängig von Anspruch 3,
**dadurch gekennzeichnet, dass**
insbesondere im Innenraum (12) des Rahmenrohres (10) wenigstens ein Batterie-Temporärhaltemittel (54) und insbesondere ein Batterieklemmsystem derart vorgesehen ist, das die Batterie (104) im Batterieaufnahmeabschnitt (14) gegen Einwirken der Schwerkraft in der Entriegelungsstellung klemmfixiert gelagert aber manuell durch einen Benutzer über ein Zugkraft entgegengesetzt zur Einschubrichtung (R_{X}) herausziehbar ist.

13. Fahrradrahmen nach einem der vorhergehenden Ansprüche,
**dadurch gekennzeichnet, dass**
das Batterieanschlussmittel (60) im Bereich des zum Lenkkopfbereich (20) weisenden Endes des Rahmenrohres (10) und insbesondere angrenzend an den Batterieaufnahmeabschnitt (14) den Batteriehub (62) aufweist.

14. Fahrrad mit einem batteriebetriebenem Hilfsantrieb und einem Fahrradrahmen nach einem der vorhergehenden Ansprüche.

## Claims

1. Bicycle frame (1) for a bicycle (100) with battery-operated auxiliary drive (28), comprising at least one frame tube (10), which has an axially running battery receiving portion (14) in its interior (12), for receiving a battery (104) for the auxiliary drive (28), wherein the battery receiving portion (14) has an insertion opening (18) running on the face side (16), via which the battery (104) can be inserted into the battery receiving portion (14) with its face side (102) first, wherein a rail system (70) is provided, which has at least one axially running rail (72), which can be inserted axially into a complementary rail receptacle (74) optionally formed integrally on the frame tube (10), and which can be inserted axially into the interior (12) of the frame tube (10) and can be fixed to the frame tube (10) by means of a locking means (76) against an axial movement, and which has a battery guide means (30), which forms a sliding guide for axially inserting the battery (104) into the battery receiving portion (14), **characterised in that** the frame tube (10) is a down tube which runs between a steering head region (20) and a drive bearing region (24), and **in that** the rail system (70) has a battery locking means (40) designed to lock the battery (104) in the battery receiving portion and against axially sliding out, and/or has a battery connecting means (60) for connecting the battery inserted into the battery receiving portion, wherein the battery connecting means has a battery hub (62) which is fastened to the rail system (70), wherein the rail system (70) is designed such that it can be inserted into the interior (12) of the frame tube (10) together with the battery locking means (40) and/or the battery hub (62).

2. Bicycle frame according to claim 1, **characterised in that** the down tube is inclined diagonally downwards along the main extension plane of the bicycle frame, which runs in relation to the bicycle frame from rear to front and in the wheel plane, viewed from front to rear.

3. Bicycle frame according to claim 1 or 2, **characterised in that** the battery (104) can be inserted into the battery receiving portion (14) along an insertion direction (Rx) axially to the main extension axis (Aₓ) of the battery receiving portion (14).

4. Bicycle frame according to any one of the preceding claims, **characterised in that** the insertion opening (18) is arranged at least partially on the face side of the frame tube (10), especially on the drive bearing side.

5. Bicycle frame according to any one of the preceding claims, **characterised in that** the sleeve surface of the frame tube (10) is closed at least 90%, in particular at least 95%, in the region of the battery receiving portion (14).

6. Bicycle frame according to any one of the preceding claims, **characterised in that** the drive bearing region (24) is formed laterally on the frame tube and in particular outside an axial extension (22) of the clearance profile of the battery receiving portion (14) on the frame tube (10), in particular comprising a drive bearing housing (26) for receiving the auxiliary drive (28), namely in such a way that the battery (104) can be inserted laterally past the auxiliary drive (28) mounted in the drive bearing housing (26) into the battery receiving portion (14).

7. Bicycle frame according to any one of the preceding claims, **characterised in that** the battery guide means (30) have at least one guide tongue (32) and the battery (104) has at least one guide groove (106) complementary thereto at least in sections, or vice versa.

8. Bicycle frame according to claim 7, **characterised in that** the guide tongue (32) projects axially outwards over the insertion opening (18) from the battery receiving portion (14) and in particular the interior (12).

9. Bicycle frame according to any one of the preceding claims, **characterised in that** the battery locking means (40) comprises an end cap (42) which can be inserted via the insertion opening (18) into the interior (12) of the frame tube (10) and can be releasably locked there, thus locking the battery (104) inserted into the battery receiving portion (14) against sliding out axially.

10. Bicycle frame according to claim 9, **characterised in that** the end cap (42) has at least one locking means (44) and the rail (72) of the rail system (70) has at least one locking countering means (46), or vice versa, which can be brought together into a locking position by means of an actuating means (50) thereby locking the battery (104) in the battery receiving portion (14) and into an unlocking position thereby releasing the battery (104) in the battery receiving portion (14).

11. Bicycle frame according to claim 10, **characterised in that** the locking means (44) has at least one locking pin (48) and the locking countering means (46) has at least one complementary locking pin receptacle (52), or vice versa, wherein the locking pin (48) engages the end cap (42) in the locking position in the locking pin receptacle (52) and in the unlocking position the end cap (42) is disengaged from the locking pin receptacle (52).

12. Bicycle frame according to any one of claims 10 or 11, if dependent on claim 3, **characterised in that** in particular in the interior (12) of the frame tube (10) at least one battery temporary holding means (54) and in particular a battery clamping system is provided in such a way that the battery (104) is mounted in the battery receiving portion (14) in a clamp-fixed manner in the unlocking position against the effect of gravity, but can be pulled out manually by a user via a pulling force opposite to the insertion direction (Rₓ).

13. Bicycle frame according to any one of the preceding claims, **characterised in that** the battery connecting means (60) has the battery hub (62) in the region of the end of the frame tube (10) pointing towards the steering head region (20) and in particular adjacent to the battery receiving portion (14).

14. Bicycle with a battery-operated auxiliary drive and a bicycle frame according to any one of the preceding claims.

## Revendications

1. Cadre de bicyclette (1) pour une bicyclette (100) avec un entraînement auxiliaire (28) alimenté par batterie, comprenant au moins un tube de cadre (10) qui présente dans son espace intérieur (12) une section de réception de batterie (14) s'étendant axialement, pour recevoir une batterie (104) pour l'entraînement auxiliaire (28), dans lequel la section de réception de batterie (14) présente une ouverture d'insertion (18) s'étendant du côté frontal (16), par laquelle la batterie (104) peut être insérée avec son côté frontal (102) en avant dans la section de réception de batterie (14), dans lequel un système de rail (70) est prévu, qui présente au moins un rail (72) s'étendant axialement, qui peut être inséré axialement dans un logement de rail (74) complémentaire, réalisé au choix de manière intégrale sur le tube de cadre (10), et qui peut être introduit axialement dans l'espace intérieur (12) du tube de cadre (10) et peut être immobilisé sur le tube de cadre (10) à l'aide d'un moyen d'immobilisation (76) pour empêcher un mouvement axial, et qui présente un moyen de guidage de batterie (30), lequel forme un guide coulissant pour l'insertion axiale de la batterie (104) dans la section de réception de batterie (14),
**caractérisé en ce que**
le tube de cadre (10) est un tube inférieur qui s'étend entre une zone de tête de direction (20) et une zone de palier d'entraînement (24),
et que le système de rail (70) présente un moyen de blocage de batterie (40), réalisé pour verrouiller la batterie (104) dans la section de réception de batterie et l'empêcher de coulisser axialement vers l'extérieur, et/ou un moyen de connexion de batterie (60), pour connecter la batterie insérée dans la section de réception de batterie, dans lequel le moyen de connexion de batterie présente une course de batterie (62) qui est fixée au système de rail (70), dans lequel le système de rail (70) est réalisé de telle sorte qu'il peut être inséré dans l'espace intérieur (12) du tube de cadre (10) conjointement avec le moyen de blocage de batterie (40) et/ou la course de batterie (62).

2. Cadre de bicyclette selon la revendication 1,
**caractérisé en ce que**
le tube diagonal, le long du plan d'étendue principal du cadre de bicyclette, lequel s'étend de l'arrière vers l'avant par rapport au cadre de bicyclette et dans le plan de roue, vu de l'avant vers l'arrière, est réalisé de manière inclinée vers le bas.

3. Cadre de bicyclette selon la revendication 1 ou 2,
**caractérisé en ce que**
la batterie (104) peut être insérée dans la section de réception de batterie (14) le long d'une direction d'insertion (Rx) axiale par rapport à l'axe d'étendue principal (Aₓ) de la section de réception de batterie (14).

4. Cadre de bicyclette selon l'une quelconque des revendications précédentes,
**caractérisé en ce que**
l'ouverture d'insertion (18) est disposée au moins partiellement en particulier du côté du palier d'entraînement côté frontal sur le tube de cadre (10).

5. Cadre de bicyclette selon l'une quelconque des revendications précédentes,
**caractérisé en ce que**
la surface d'enveloppe du tube de cadre (10) est fermée à au moins 90 %, en particulier à au moins 95 %, dans la zone de la section de réception de batterie (14).

6. Cadre de bicyclette selon l'une quelconque des revendications précédentes,
**caractérisé en ce que**
la zone de palier d'entraînement (24) est réalisée latéralement sur le tube de cadre et en particulier à l'extérieur d'un prolongement axial (22) du profil d'espace libre de la section de réception de batterie (14) sur le tube de cadre (10), comprenant en particulier un carter de palier d'entraînement (26), pour la réception de l'entraînement auxiliaire (28), et ce de telle sorte que la batterie (104) peut être insérée latéralement dans la section de réception de batterie (14) en passant devant l'entraînement auxiliaire (28) monté dans le carter de palier d'entraînement (26).

7. Cadre de bicyclette selon l'une quelconque des revendications précédentes,
**caractérisé en ce que**
le moyen de guidage de batterie (30) présente au moins un ressort de guidage (32) et la batterie (104) au moins une rainure de guidage (106) complémentaire de celui-ci au moins par sections, ou inversement.

8. Cadre de bicyclette selon la revendication 7,
**caractérisé en ce que**
le ressort de guidage (32) fait saillie axialement vers l'extérieur de la section de réception de batterie (14) et en particulier de l'espace intérieur (12) par l'intermédiaire de l'ouverture d'insertion (18).

9. Cadre de bicyclette selon l'une quelconque des revendications précédentes,
**caractérisé en ce que**
le moyen de blocage de batterie (40) comprend un capuchon latéral frontal (42), qui peut être placé dans l'espace intérieur (12) du tube de cadre (10) par l'intermédiaire de l'ouverture d'insertion (18) et peut y être verrouillé de manière libérable et verrouille ainsi la batterie (104) insérée dans la section de réception de batterie (14) pour l'empêcher de coulisser axialement vers l'extérieur.

10. Cadre de bicyclette selon la revendication 9,
**caractérisé en ce que**
le capuchon latéral frontal (42) présente au moins un moyen de verrouillage (44) et le rail (72) du système de rail (70) au moins un moyen de verrouillage antagoniste (46), ou inversement, qui peuvent être amenés l'un avec l'autre à l'aide d'un moyen d'actionnement (50) avec verrouillage de la batterie (104) dans la section de réception de batterie (14) dans une position de verrouillage et avec libération de la batterie (104) dans la section de réception de batterie (14) dans une position de déverrouillage.

11. Cadre de bicyclette selon la revendication 10,
**caractérisé en ce que**
le moyen de verrouillage (44) présente au moins un boulon d'arrêt (48), et le moyen de verrouillage antagoniste (46) au moins un logement de boulon d'arrêt (52) complémentaire, ou inversement, dans lequel le boulon d'arrêt (48) dans la position de verrouillage s'engage dans le logement de boulon d'arrêt (52) en verrouillant le capuchon latéral frontal (42), et dans la position de déverrouillage est hors de prise avec le logement de boulon d'arrêt (52) en déverrouillant le capuchon latéral frontal (42).

12. Cadre de bicyclette selon l'une quelconque des revendications 10 ou 11, lorsqu'elle dépend de la revendication 3,
**caractérisé en ce que**
en particulier dans l'espace intérieur (12) du tube de cadre (10), au moins un moyen de maintien temporaire de batterie (54) et en particulier un système de serrage de batterie est prévu, de telle sorte que la batterie (104) est montée de manière fixée par serrage dans la section de réception de la batterie (14) à l'encontre de l'action de la gravité dans la position de déverrouillage, mais peut être extraite manuellement par un utilisateur par l'intermédiaire d'une force de traction dans le sens opposé au sens d'insertion (Rₓ).

13. Cadre de bicyclette selon l'une quelconque des revendications précédentes,
**caractérisé en ce que**
le moyen de connexion de batterie (60) présente la course de batterie (62) dans la zone de l'extrémité du tube de cadre (10) orientée vers la zone de tête de direction (20) et en particulier de manière adjacente à la section de réception de batterie (14).

14. Bicyclette avec un entraînement auxiliaire alimenté par batterie et un cadre de bicyclette selon l'une quelconque des revendications précédentes.
